(19) Europäisches Patentamt

European Patent Office

Office européen des brevets

(11) **EP 1 054 384 A2**

(12) **EUROPEAN PATENT APPLICATION**

(43) Date of publication:
22.11.2000 Bulletin 2000/47

(51) Int. Cl.$^7$: **G09G 5/36**, G06T 1/60

(21) Application number: 00110606.1

(22) Date of filing: 18.05.2000

(84) Designated Contracting States:
**AT BE CH CY DE DK ES FI FR GB GR IE IT LI LU MC NL PT SE**
Designated Extension States:
**AL LT LV MK RO SI**

(30) Priority: 20.05.1999 US 315176

(71) Applicant:
**MITSUBISHI DENKI KABUSHIKI KAISHA**
**Tokyo 100-8310 (JP)**

(72) Inventors:
• **Correll, Kenneth W.**
**Lancster, MA 01523 (US)**

• **Knittel, James M.**
**Groton, MA 01450 (US)**
• **Peet, William R.**
**Billerica, MA 01821 (US)**
• **Burgess, Stephen R.**
**Medfield, MA 02052 (US)**
• **Wilkinson, Jay C.**
**Newton, MA 02460 - 1411 (US)**

(74) Representative:
**Pfenning, Meinig & Partner**
**Mozartstrasse 17**
**80336 München (DE)**

(54) **Method and apparatus for translating and interfacing voxel memory addresses**

(57) A memory interface for a plurality of rendering pipelines includes three interfaces. An interface couples a host memory to a voxel memory. The host memory stores a volume data set as a three dimensional array of voxels. The voxel memory stores the volume data set as a three-dimensional array of mini-blocks of voxels. A second interface couples the voxel memory to the plurality of rendering pipelines for generating pixels from the voxels stored in the voxel memory. A third interface couples the rendering pipelines to a pixel memory for storing the pixels as a two-dimensional array.

FIG. 5a

## Description

### CROSS REFERENCE TO RELATED APPLICATIONS

This application is a continuation in part of patent application serial number 09/191,865 (Attorney Docket number VGO-115) , filed by Knittel et al. on Nov. 12, 998, and entitled "TWO-LEVEL MINI-BLOCK STORAGE SYSTEM FOR VOLUME DATA SETS."

### FIELD OF INVENTION

The invention relates generally to the field of computer graphics, and particularly to translating voxel addresses.

### FIELD OF INVENTION

The present invention is related to the field of computer graphics, and in particular to a volume graphics memory interfaced to multiple volume rendering pipelines.

### BACKGROUND OF THE INVENTION

Volume graphics is the subfield of computer graphics that deals with the visualization of objects or phenomena represented as sampled data in three or more dimensions. These samples are called volume elements, or "voxels," and contain digital information representing physical characteristics of the objects or phenomena being studied. For example, voxel values for a particular object or system may represent density, type of material, temperature, velocity, or some other property at discrete points in space throughout the interior and in the vicinity of that object or system.

Volume rendering is the part of volume graphics concerned with the projection of volume data as two-dimensional images for purposes of printing, display on computer terminals, and other forms of visualization. By assigning colors and transparency to voxel data values, different view directions of the exterior and interior of an object or system can be displayed. For example, a surgeon needing to examine the ligaments, tendons, and bones of a human knee in preparation for surgery can utilize a tomographic scan of the knee and cause voxel data values corresponding to blood, skin, and muscle to appear to be completely transparent.

The resulting image then reveals the condition of the ligaments, tendons, bones, etc. which are hidden from view prior to surgery, thereby allowing for better surgical planning, shorter surgical operations, less surgical exploration and faster recoveries. In another example, a mechanic using a tomographic scan of a turbine blade or welded joint in a jet engine can cause voxel data values representing solid metal to appear to be transparent while causing those representing air to be opaque. This allows the viewing of internal flaws in the metal that would otherwise be hidden from the human eye.

Real-time volume rendering is the projection and display of volume data as a series of images in rapid succession, typically at 24 or 30 frames per second or faster. This makes it possible to create the appearance of moving pictures of the object, phenomenon, or system of interest. It also enables a human operator to interactively control the parameters of the projection and to manipulate the image, thus providing the user with immediate visual feedback. It will be appreciated that projecting tens of millions or hundreds of millions of voxel values to an image requires enormous amounts of computing power. Doing so in real-time requires substantially more computational power.

Additional general background on volume rendering is presented in a book entitled "Introduction to Volume Rendering" by Barthold Lichtenbelt, Randy Crane, and Shaz Naqvi, published in 1998 by Prentice Hall PTR of Upper Saddle River, New Jersey. Further background on volume rendering architectures is found in a paper entitled "Towards a Scalable Architecture for Real-time Volume Rendering" presented by H. Pfister, A. Kaufman, and T. Wessels at the 10th Eurographics Workshop on Graphics Hardware at Maastricht, The Netherlands, on August 28 and 29, 1995. This paper describes an architecture now known as "Cube 4."

The Cube 4 is also described in a Doctoral Dissertation entitled "Architectures for Real-Time Volume Rendering" submitted by Hanspeter Pfister to the Department of Computer Science at the State University of New York at Stony Brook in December 1996, and in U.S. Patent No. 5,594,842, "Apparatus and Method for Real-time Volume Visualization."

The task of designing a flexible and efficient interface between a memory where the volume data set is stored, and a processor which renders the volume as a real-time sequence of images needs to address two problems. First, the arrangement of the voxels in the data set must maximize parallelism regardless of view direction, where the processor permits it, taking into considerations physical access limitations inherent in semiconductor memory devices. Maximizing parallelism increases the bandwidth of the interface. Second, the transfer of data from the memory to the processor must take maximum advantage of the inherent bandwidth of the memory and minimize transfer delays due to synchronization requirements in a pipelined processor. Delays cause stalls.

## SUMMARY OF THE INVENTION

The invention provides a memory interface for storing and retrieving data associated with a volume data set in a voxel memory. The interface transfers data between a host memory and the voxel memory. In one embodiment, voxel data is stored in a first order as groups of mini-blocks using writes by the host. When voxel data is retrieved from the voxel memory, it is forwarded by the memory interface in a beam/slice order for processing by a coupled rendering device. As voxels are addressed for rendering purposes, and a transformation is performed on the coordinates of the volume data set to adjust the position of the volume data set according to a view direction of the data set.

According to one aspect of the invention, an interface couples a rendering device to a memory. The memory stores a three-dimensional volume data set organized in mini-blocks of voxel data. The interface includes a traverser forwarding render read addresses to the memory to retrieve groups of mini-blocks. A plurality of slice buffers store the voxels of the groups of mini-blocks in a slice order for rendering operations.

In another aspect, the memory interface includes three interfaces. A interface couples a host memory to a voxel memory. The host memory stores a volume data set as a three dimensional array of voxels. The voxel memory stores the volume data set as a three-dimensional array of mini-blocks of voxels. A second interface couples the voxel memory to the plurality of rendering pipelines for generating pixels from the voxels stored in the voxel memory. A third interface couples the rendering pipelines to a pixel memory for storing the pixels as a two-dimensional array.

## BRIEF DESCRIPTION OF THE DRAWINGS

The foregoing features of this invention, as well as the invention itself, may be more fully understood from the following Detailed Description of the Invention, and Drawing, of which:

Figure 1 is a diagrammatic illustration of a volume data set and respective coordinate systems;
Figure 2 is a diagrammatic illustration of a view of a volume data set being projected onto an image plane by means of ray-casting;
Figure 3 is a cross-sectional view of the volume data set of Figure 2;
Figure 4 is a diagrammatic illustration of the processing of an individual ray by ray-casting;
Figure 5A is a block diagram of one embodiment of a pipelined processing element for real-time volume rendering in accordance with the present invention;
Figure 5B is a block diagram of a second embodiment of a portion of the pipelined processing element of Figure 5A;
Figure 6 is a block diagram of the logical layout of a volume graphics system including a host computer coupled to a volume graphics board operating in accordance with the present invention;
Figure 7 is a block diagram of the general layout of a volume rendering integrated circuit on the circuit board of Figure 6, where the circuit board includes the processing pipelines of Figures 5A or 5B;
Figure 8 illustrates how a volume data set is organized into sections;
Figure 9 is a block diagram of the volume rendering integrated circuit of Figure 7 showing parallel processing pipelines such as those of Figures 5A and 5B;

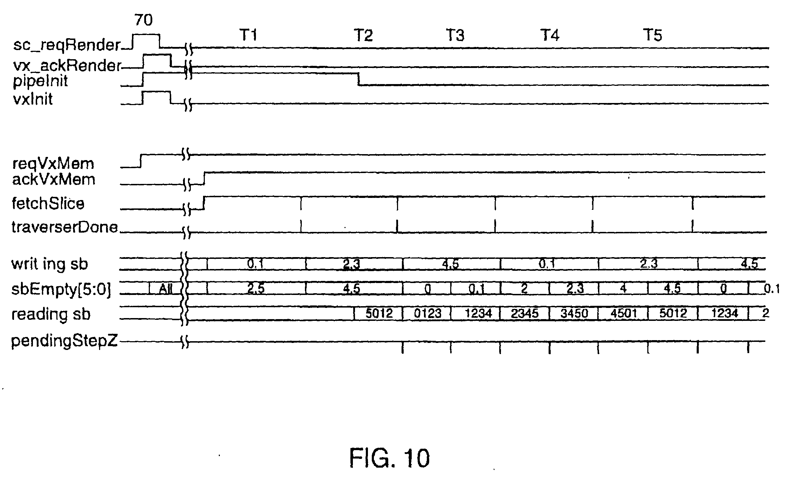

Figure 10 is a timing diagram for illustrating the forwarding of voxels from a memory interface to the integrated circuit of Figure 7;
Figure 11 is a diagrammatic representation of the mapping of voxels comprising a mini-block to an SDRAM;
Figure 12 is a diagrammatic representation of mini-blocks in memory;
Figure 13 is a diagrammatic representation of mini-blocks within the banks and rows of the DRAMs;
Figure 14 is provided to illustrate one method of rendering a sectioned data set such as that described in Figure 8;
Figure 15 is a block diagram of one embodiment of a voxel memory interface provided in the integrated circuit of Figure 7;
Figure 16 is a block diagram of one embodiment of a memory controller provided in the voxel memory interface of Figure 15;
Figure 17 is a state diagram illustrating the various interrelationships of states in a state machine of the memory controller of Figure 16;
Figure 18 is a block diagram of one embodiment of a traverser that is used to provide an address to the memory controller of Figure 16;
Figure 19 illustrates exemplary mappings of a transform register that is used to generate and address at the traverser of Figure 18;
Figure 20 is a block diagram of deskewing logic that is provided in the memory interface of Figure 15;

Figure 21 is a table illustrating exemplary skewed voxel orders that are deskewed using the deskewing logic of Figure 20;

Figure 22 illustrates a relationship between voxels stored as a mini-beam and voxels retrieved as slices during the processing of a volume data set; and

Figure 23A is a block diagram of one embodiment of slice buffer and output logic used in the memory interface of Figure 15.

## DETAILED DESCRIPTION OF PREFERRED EMBODIMENTS

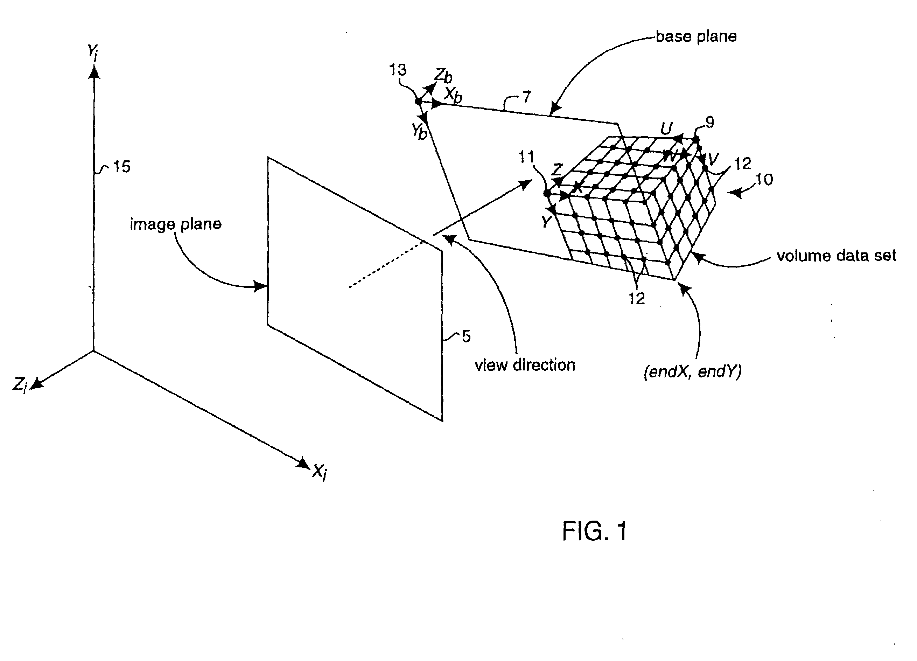

Referring now to Figure 1, a view of a three-dimensional volume data set 10 is shown. Figure 1 depicts an array of voxel positions 12 arranged in the form of a rectangular solid 10. More particularly, the voxel positions fill the solid in three dimensions and are uniformly spaced in a particular dimension. Associated with each voxel position is one or more data values representing some characteristics of an object, system, or phenomenon under study, for example density, type of material, temperature, velocity, opacity or other properties at discrete points in space throughout the interior and in the vicinity of that object or system.

A brief description of the basic coordinate system used herein, and the relationship between the coordinates and the planes will first be described. There are four basic coordinate systems in which the voxels of the data set may be referenced - object coordinates $(u,v,w)$, permuted coordinates $(x,y,z)$, base plane coordinates $(x_b,y_b,z_b)$, and image space coordinates $(x_i, y_i,z_i)$. The object and image space coordinates are typically right-handed coordinate systems. The permuted coordinate system may be either right-handed or left-handed, depending upon a selected view direction.

The volume data set is an array of voxels defined in object coordinates with axes u, v, and w as indicated at 9. The origin is located at one corner of the volume, typically a corner representing a significant staffing point from the object's own point of view. The voxel at the origin is stored at the base address of the volume data set stored in a memory, as will be described later herein. Any access to a voxel in the volume data set is expressed in terms of u, v and w, which are then used to obtain an offset from this address. The unit distance along each axis equals the spacing between adjacent voxels along that axis. In Figure 1 the volume data set is represented as a cube 10.

Figure 1 illustrates an example of a volume data set 10. It is rotated so that the origin of the object is in the upper, right, rear corner. That is, the object represented by the data set is being viewed from the back, at an angle. In the permuted coordinate system $(x,y,z)$, represented by 11, the origin is repositioned to the vertex of the volume nearest the image plane 5, where the image plane is a two-dimensional viewing surface. The z-axis is the edge of the volume most nearly parallel to the view direction. The x-and y-axes are selected such that the traversal of voxels in the volume data set 10 always occurs in a positive direction. In Figure 1, the origin of the permuted coordinate system is the opposite corner of the volume from the object's own origin.

The base plane coordinate system coordinates $(x_b, y_b, z_b)$ is a system in which the $z_b = 0$ plane is co-planar with the xy-face of the volume data set in permuted coordinates. The base plane 7 is a finite plane that extends from the base plane origin to a maximum point that depends upon both the size of the volume data set and upon the view direction.

The image space coordinate system $(x_i, y_i,z_i)$, represented at 15, is the coordinate system of the final image resulting from rendering the volume. The $z_i=0$ plane 5 is the plane of the computer screen, printed page or other medium on which the volume is to be displayed.

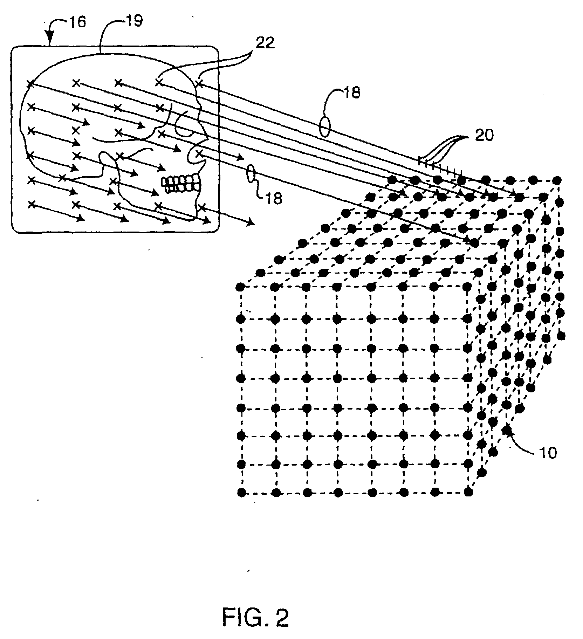

By way of example, Figure 2 illustrates the volume data set 10 as comprising an array of slices from a tomographic scan of the human head. A two-dimensional image plane 16 represents the surface on which a volume rendered projection of the human head is to be displayed. In a technique known as ray-casting, rays 18 are cast from pixel positions 22 on the image plane 16 through the volume data set 10, with each ray accumulating color and opacity from the data at voxel positions as it passes through the volume. In this manner, the color, transparency, and intensity as well as other parameters of a pixel are extracted from the volume data set as the accumulation of data at sample points 20 along the ray. In this example, voxel values associated with bony tissue are assigned an opaque color, and voxel values associated with all other tissue in the head are assigned a transparent color. Therefore, the accumulation of data along a ray and the attribution of this data to the corresponding pixel result in an image 19 in viewing plane 16 that appears to an observer to be an image of a three-dimensional skull, even though the actual skull is hidden from view by the skin and other tissue of the head.

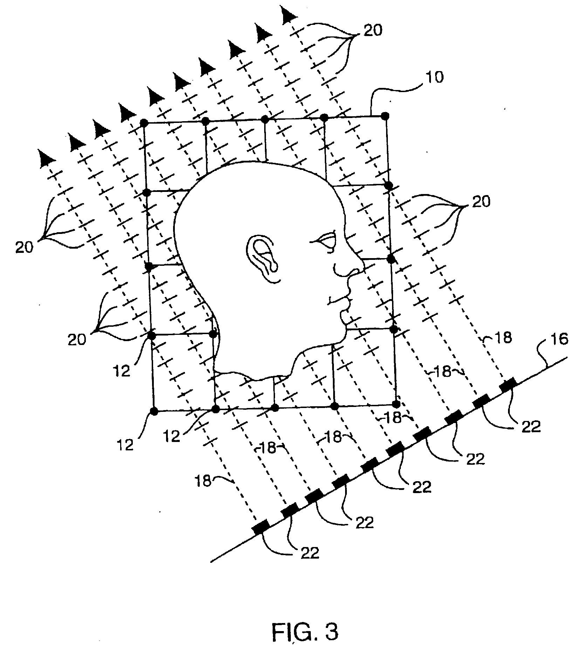

In order to appreciate more fully the method of ray-casting, Figure 3 depicts a two-dimensional cross-section of the three-dimensional volume data set 10. The first and second dimensions correspond to the dimensions illustrated on the plane of the page. The third dimension of volume data set 10 is perpendicular to the printed page so that only a cross section of the data set can be seen in the figure. Voxel positions are illustrated by dots 12 in the figure. The voxels associated with each position are data values that represent some characteristic or characteristics of a three-dimensional object 14 at fixed points of a rectangular grid in three-dimensional space. Also illustrated in Figure 3 is a one-dimensional view of a two-dimensional image plane 16 onto which an image of object 14 is to be projected in terms of pixels 22 with the appropriate characteristics. In this illustration, the second dimension of image plane 16 is also perpendicular to the printed page.

In the technique of ray-casting, rays 18 are extended from pixels 22 of the image plane 16 through the volume data set 10. Each ray accumulates color, brightness, and transparency or opacity at sample points 20 along that ray. This accumulation of light determines the brightness and color of the corresponding pixels 22. Thus, while the ray is depicted going outwardly from a pixel through the volume, the accumulated data can be thought of as being transmitted back down the ray where it is provided to the corresponding pixel to give the pixel color, intensity and opacity or transparency, amongst other parameters. It will be appreciated that although Figure 3 suggests that the third dimension of volume data set 10 and the second dimension of image plane 16 are both perpendicular to the printed page and therefore parallel to each other, in general this is not the case. The image plane may have any orientation with respect to the volume data set, so that rays 18 may pass through volume data set 10 at any angle in all three dimensions.

It will also be appreciated that sample points 20 do not necessarily intersect the voxel 12 coordinates exactly. Therefore, the value of each sample point must be synthesized from the values of voxels nearby. That is, the intensity of light, color, and transparency or opacity at each sample point 20 must be calculated or interpolated as a mathematical function of the values of nearby voxels 12. The re-sampling of voxel data values to values at sample points is an application of the branch of mathematics known as sampling theory. The sample points 20 of each ray 18 are then accumulated by another mathematical function to produce the brightness and color of the pixel 22 corresponding to that ray. The resulting set of pixels 22 forms a visual image of the object 14 in the image plane 16.

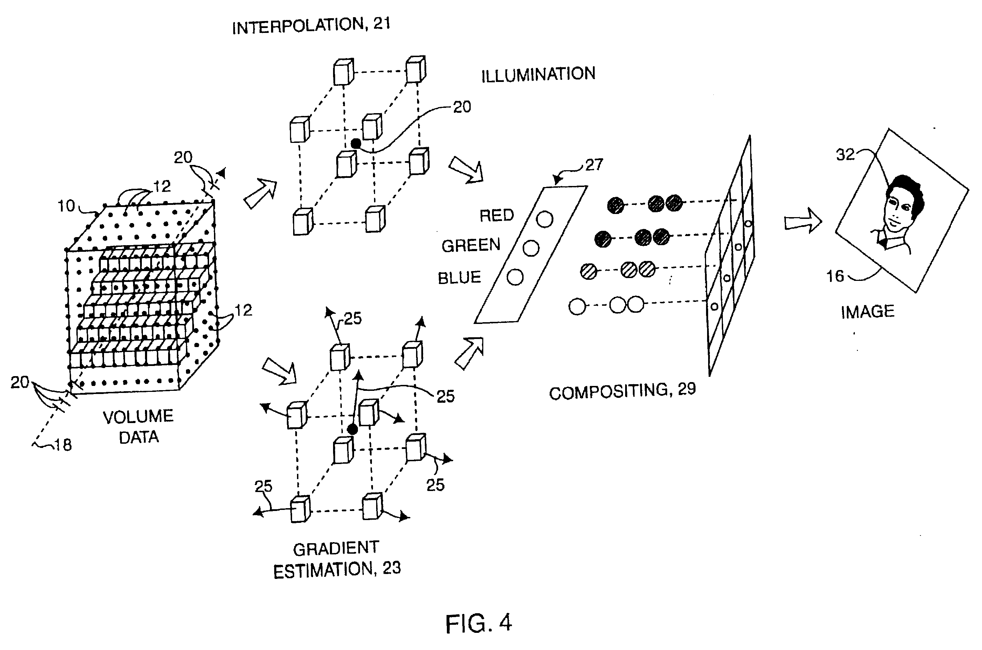

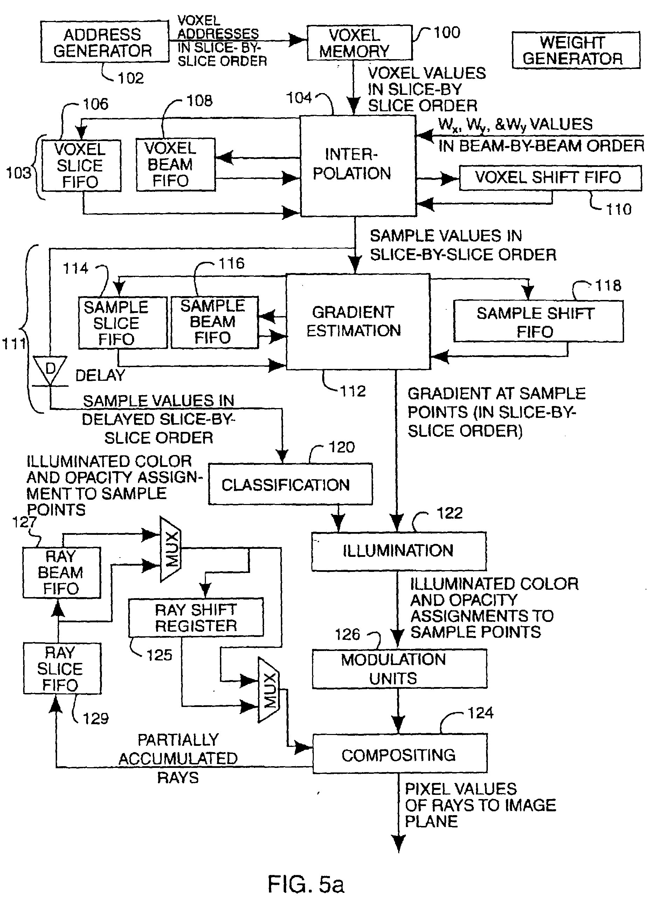

Figure 4 illustrates the processing of an individual ray. Ray 18 passes through the three-dimensional volume data set 10 at some angle, passing near or possible through voxel positions 12, and accumulates data at sample points 20 along each ray. The value at each sample point is synthesized as illustrated at 21 by an interpolation unit 103 (see Figure 5A), and its gradient is calculated as illustrated at 23 by a gradient estimation unit 111 (see Figure 5A). The sample point values from sample point 20 and the gradient 25 for each sample point are then processed to assign color, brightness or intensity, and transparency or opacity to each sample. As illustrated at 27, this is done via processing in which red, green and blue hues as well as intensity and opacity or transparency are calculated. Finally, the colors, levels of brightness, and transparencies assigned to all of the samples along all of the rays are applied as illustrated at 29 to a compositing unit 124 (of Figure 5a) that mathematically combines the sample values into pixels depicting the resulting image 32 for display on image plane 16.

The calculation of the color, brightness or intensity, and transparency of sample points 20 is done in two parts. In one part, a mathematical function such as trilinear interpolation is utilized to take the weighted average of the values of the eight voxels in a cubic arrangement immediately surrounding the sample point 20. The resulting average is then used to assign a color and opacity or transparency to the sample point by some transfer function. In the other part, the mathematical gradient of the sample values at each sample point 20 is estimated by a method such as taking the differences between nearby sample points. It will be appreciated that these two calculations can be implemented in either order or in parallel with each other to produce mathematically equivalent results. The gradient is then used in a lighting calculation to determine the brightness of the sample point. Lighting calculations are well-known in the computer graphics art and are described, for example, in the textbook "Computer Graphics: Principles and Practice," 2nd edition, by J. Foley, A. vanDam, S. Feiner, and J. Hughes, published by Addison-Wesley of Reading, Massachusetts, in 1990.

Figure 5A depicts a block diagram of one embodiment of a pipelined processor appropriate for performing the calculations illustrated in Figure 4. The pipelined processor includes a plurality of pipeline stages, each stage of which holds one data element, so that a plurality of data elements are being processed at one time. Each data element is at a different degree of progress in its processing, and all data elements move from stage to stage of the pipeline in lock step. At the first stage of the pipeline, a series of voxel data values flow into the pipeline at a rate of one voxel per cycle from the voxel memory 100, which operates under the control of an address generator 102. The voxels arrive from the memory via a communications channel and memory interface described in greater detail below.

The interpolation unit 104 receives voxel values located at coordinates x-, y- and z-in three-dimensional space, where x, y, and z are each integers. The interpolation unit 104 is a set of pipelined stages that synthesize data values at sample points between voxels corresponding to positions along rays that are cast through the volume. During each cycle, one voxel enters the interpolation unit and one interpolated sample value emerges. The latency between the time a voxel value enters the pipeline and the time that an interpolated sample value emerges depends upon the number of pipeline stages and the internal delay in each stage.

The interpolation stages of the pipeline comprise a set of interpolator stages 104 and three FIFO elements 106, 108, 110. The FIFOs delay data in the stages so that the data can be combined with later arriving data. In the current embodiment, these are all linear interpolations, but other interpolation functions such as cubic and LaGrangian may also be employed. In the illustrated embodiment, interpolation is performed in each dimension as a separate stage, and the respective FIFO elements are included to delay data for purposes of interpolating between voxels that are adjacent in space but widely separated in the time of entry to the pipeline. The delay of each FIFO is selected to be exactly the amount of time elapsed between the reading of one voxel and the reading of an adjacent voxel in that particular dimension so that the two can be combined in an interpolation function.

It will be appreciated that voxels can be streamed through the interpolation stage at a rate of one voxel per cycle with each voxel being combined with the nearest neighbor that had been previously delayed through the FIFO associated with that dimension. It will also be appreciated that in a semiconductor implementation, these and other FIFOs can be implemented as random access memories.

Three successive interpolation stages, one for each dimension, are concatenated and voxels can pass through the three stages at a rate of one voxel per cycle at both the input and the output. The throughput of the interpolation stages is one voxel per cycle independent of the number of stages within the interpolation unit and independent of the latency of the data within the interpolation unit and the latency of the delay FIFO within that unit. Thus, the interpolation unit converts voxel values located at integer positions in xyz space into sample values located at non-integer positions at the rate of one voxel per cycle. In particular, the interpolation unit converts values at voxel positions to values at sample positions disposed along the rays.

Following the interpolation unit 104 is a gradient estimation unit 112, which also includes a plurality of pipelined stages and delay FIFOs. The function of the gradient unit 112 is to derive the rate of change of the sample values in each of the three dimensions. The gradient estimation unit operates in a similar manner to the interpolation unit 104 and computes the rate of change of the sample values in each of the three dimensions. Note, the gradient is used to determine a normal vector for illumination, and its magnitude may be used as a measure of the existence of a surface when the gradient magnitude is high. In the present embodiment the calculation is obtained by taking central differences, but other functions known in the art may be employed.

Because the gradient estimation unit is pipelined, it receives one interpolated sample per cycle, and it outputs one gradient per cycle. As with the interpolation unit, each gradient is delayed from its corresponding sample by a number of cycles which is equal to the amount of latency in the gradient estimation unit 112 including respective delay FIFOs 114, 116, 118. The delay for each of the FIFOs is determined by the length of time needed between the reading of one interpolated sample and nearby interpolated samples necessary for deriving the gradient in that dimension.

The interpolated sample and its corresponding gradient are concurrently applied to the classification and illumination units 120 and 122 respectively at a rate of one interpolated sample and one gradient per cycle. Classification unit 120 serves to convert interpolated sample values into colors in the graphics system; i.e., red, green, blue and alpha values, also known as RGBA values. The red, green, and blue values are typically fractions between zero and one inclusive and represent the intensity of the color component assigned to the respective interpolated sample value. The alpha value is also typically a fraction between zero and one inclusive and represents the opacity assigned to the respective interpolated sample value.

The gradient is applied to the illumination unit 122 to modulate the newly assigned RGBA values by adding highlights and shadows to provide a more realistic image. Methods and functions for performing illumination are well known in the art The illumination and classification units accept one interpolated sample value and one gradient per cycle and output one illuminated color and opacity value per cycle.

Although in the current embodiment, the interpolation unit 104 precedes the gradient estimation unit 112, which in turn precedes the classification unit 120, it will be appreciated that in other embodiments these three units may be arranged in a different order. In particular, for some applications of volume rendering it is preferable that the classification unit precede the interpolation unit. In this case, data values at voxel positions are converted to RGBA values at the same positions, then these RGBA values are interpolated to obtain RGBA values at sample points along rays.

The compositing unit 124 combines the illuminated color and opacity values of all sample points along a ray to form a final pixel value corresponding to that ray for display on the computer terminal or two-dimensional image surface. RGBA values enter the compositing unit 124 at a rate of one RGBA value per cycle and are accumulated with the RGBA values at previous sample points along the same ray. When the accumulation is complete, the final accumulated value is output as a pixel to the display or stored as image data. The compositing unit 124 receives one RGBA sample per cycle and accumulates these ray by ray according to a compositing function until the ends of rays are reached, at which point the one pixel per ray is output to form the final image. A number of different functions well known in the art can be employed in the compositing unit, depending upon the application.

Between the illumination unit 122 and the compositing unit 124, various modulation units 126 may be provided to permit modification of the illuminated RGBA values, thereby modifying the image that is ultimately viewed. One such modulation unit is used for cropping the sample values to permit viewing of a restricted subset of the data. Another modulation unit provides a function to show a slice of the volume data at an arbitrary angle and thickness. A third modulation unit provides a three-dimensional cursor to allow the user or operator to identify positions in xyz space within the data.

Each of the above identified functions is implemented as a plurality of pipelined stages accepting one RGBA value as input per cycle and emitting as an output one modulated RGBA value per cycle. Other modulation functions may also be provided which may likewise be implemented within the pipelined architecture herein described. The addition of the pipelined modulation functions does not diminish the throughput (rate) of the processing pipeline in any way but rather affects the latency of the data as it passes through the pipeline.

In order to achieve a real-time volume rendering rate of, for example, 30 frames per second for a volume data set with 256×256×256 voxels, voxel data must enter the pipelines at $256^3 \times 30$ frames per second or approximately 500 million voxels per second. It will be appreciated that although the calculations associated with any particular voxel involve many stages and therefore have a specified latency, calculations associated with a plurality of different voxels can be in progress at once, each one being at a different degree of progression and occupying a different stage of the pipeline. This makes it possible to sustain a high processing rate despite the complexity of the calculations.

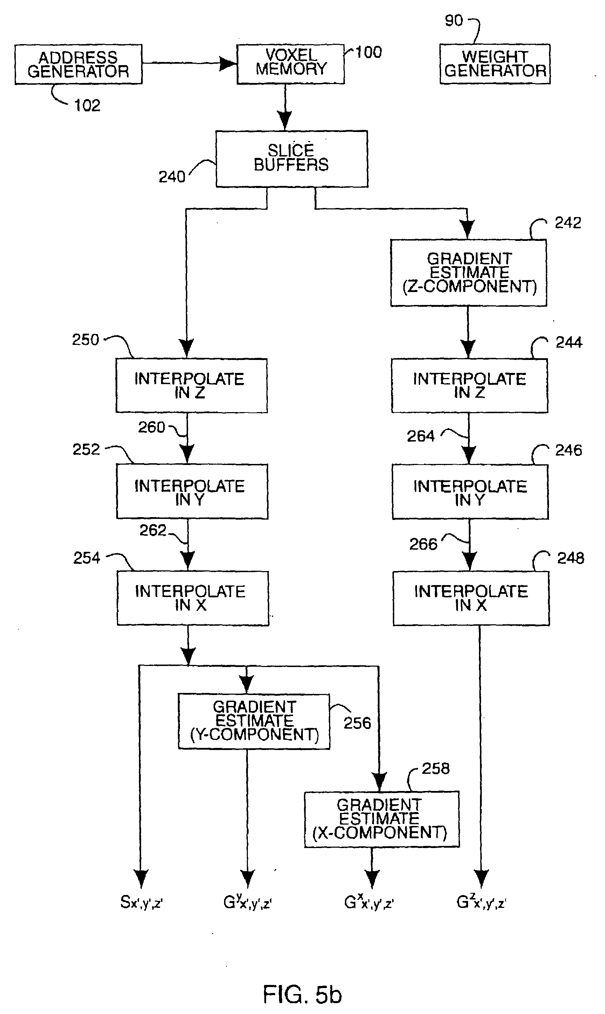

Referring now to Figure 5B, a second embodiment of one portion of the pipelined processor of Figure 5A is shown, where the order of interpolation and gradient magnitude estimation is different from that shown in Figure 5A. In general, the x-and y-components of the gradient of a sample, $G_x x', y', z'$ andN $G_y x', y', z'$; are each estimated as a "central difference," i.e., the difference between two adjacent sample points in the corresponding dimension. The x-and y-gradients may therefore be represented as shown in below equation I:

$$G_x x'N, y', z' = S(x'+1), y', z' - S(x'-1), y', z', \text{ and} \qquad \text{Equation I}$$

$$G_y x', y', z' = Sx', (y'+1), z' - Sx', (y'-1), z'$$

The calculation of the z-component of the gradient (also referred to herein as the "z gradient") $G_z x', y', z'$ is not so straightforward, because in the z-direction samples are offset from each other by an arbitrary viewing angle. It is possible, however, to greatly simplify the calculation of $G_z x', y', z'$ when both the gradient calculation and the interpolation calculation are linear functions of the voxel data (as in the illustrated embodiment). When both functions are linear, it is possible to reverse the order in which the functions are performed without changing the result. The z-gradient is calculated at each voxel position 12 in the same manner as described above for $G_x x', y', z'$ and $G_y x', y', z'$, and then $G_z x', y', z'$ is obtained at the sample point x',y',z' by interpolating the voxel z-gradients in the z-direction.

The embodiment of Figure 5B is one illustrative embodiment that facilitates the calculation of the z-gradient. A set of slice buffers 240 is used to buffer adjacent slices of voxels from the voxel memory 100, in order to time-align voxels adjacent in the z-direction for the gradient and interpolation calculations. The slice buffers are part of the memory-to-pipeline communication channels. The slice buffers 240 are also used to de-couple the timing of the voxel memory 100 from the timing of the remainder of the processing unit when z-axis supersampling is employed, a function described in greater detail in U.S. Patent Application 09/190,712 "Super-Sampling and Gradient Estimation in a Ray-Casting Volume Rendering System," Attorney Docket no. VGO-118, filed by Osborne et al. on November 12, 1998, and incorporated herein by reference.

A first gradient estimation unit 242 calculates the z-gradient for each voxel from the slice buffers 240. A first interpolation unit 244 interpolates the z-gradient in the z-direction, resulting in four intermediate values analogous to the voxel values described above. These values are interpolated in the y- and x-directions by interpolation units 246 and 248 to yield the interpolated z-gradient $G_z x', y', z'$. Similar to Figure 5A, delay buffers (not shown) are used to temporarily store the intermediate values from unitsu4 and 246 for interpolating neighboring z-gradients in a manner like that discussed above for samples.

The voxels from the slice buffers 240 are also supplied to cascaded interpolation units 250, 252 and 254 in order to calculate the sample values Sx',y',z'. These values are used by the classification unit 120 of Figure 5A, and are also supplied to additional gradient estimation units 256 and 258 in which the y-and x-gradients $G_y x', y', z'$ and $G_x x', y', z'$ respectively are calculated.

As shown in Figure 5B, the calculation of the z-gradients $G_z x', y', z'$ and the samples Sx',y',z' proceed in parallel, as opposed to the sequential order of the embodiment of Figure 5A. This structure has the benefit of significantly simplifying the z-gradient calculation. As another benefit, calculating the gradient in this fashion can yield more accurate results, especially at higher spatial sampling frequencies. The calculation of central differences on more closely-spaced samples is more sensitive to the mathematical imprecision inherent in a real processor. However, the benefits of this approach are accompanied by a cost, namely the cost of three additional interpolation units 244, 246 and 248. In alternative embodiments, it may be desirable to forego the additional interpolation units and calculate all gradients from samples alone. Conversely, it may be desirable to perform either or both of the x-gradient and y-gradient calculations in the same manner as shown for the z-gradient. In this way the benefit of greater accuracy can be obtained in a system in which the cost of the additional interpolation units is not particularly burdensome.

Either of the above described processor pipelines of Figures 5A and 5B can be replicated as a plurality of parallel pipelines to achieve higher throughput rates by processing adjacent voxels in parallel. The cycle time of each pipeline is determined by the number of voxels in a typical volume data set, multiplied by the desired frame rate, and divided by the number of pipelines. In a preferred embodiment, the cycle time is approximately 8 nanoseconds and four pipelines are employed in parallel, thereby achieving a processing rate of more than 500 million voxel values per second. It should be noted, that the invention can be used with any reasonable number of parallel pipelines.

Volume Rendering System

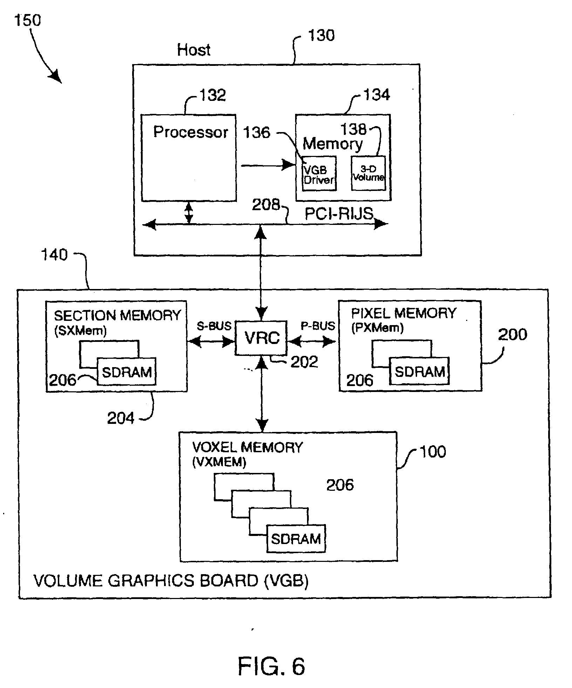

Figure 6 illustrates one embodiment of a volume rendering system 150 in which a volume rendering pipeline such as the pipeline described with regard to Figure 5A or 5B may be used to provide real-time interactive volume rendering. In the embodiment of Figure 6, the rendering system 150 includes a host computer 130 connected to a volume graphics board (VGB) 140 by an interconnect bus 208. In one embodiment, an interconnect bus operating according to a Peripheral Component Interconnect (PCI) protocol is used to provide a 133 MHz communication path between the VGB 140 and the host computer 130. Alternative interconnects available in the art may also be used and the present invention is not limited to any particular interconnect.

The host computer 130 may be any sort of personal computer or workstation having a comparable, i.e., PCI, bus interconnect. This bus can also be called the host data path because it is used to transfer voxels between the host memory and the voxel memory. Because the internal architectures of host computers vary widely, only a subset of representative components of the host 130 are shown for purposes of explanation. In general, each host 130 includes a processor 132 and a memory 134. In Figure 6 the memory 134 is meant to represent any combination of internal and external storage available to the processor 132, such as cache memory, DRAM, hard drive, and external zip or tape drives.

In Figure 6, two components are shown stored in memory 134. These components include a VGB driver 136 and a volume 138. The VGB driver 136 is executable program code that is used to control VGB 140. The volume 138 is a data set represented as an array of voxels, such as that described with reference to Figures 1-4, that is to be rendered on a display (not shown) by the VGB 140. Each voxel in the array is described by its voxel position and voxel value. The voxel position is a three-tuple (x,y,z) defining the coordinate of the voxel in object space. Voxels may comprise 8-, 12- or 16-bit intensity values with a number of different bit/nibble ordering formats. The present invention is not limited to any particular voxel format.

Note that the formats specifying what is in host memory and what exists in voxel memory are independent. Voxels are arranged consecutively in host memory, starting with the volume origin, in permuted space, (x,y,z = 0,0,0). Sizex, sizey, and sizez are the number of voxels in the host volume in each direction, and thus, the voxel with "voxel coordinates" (x,y,z) has position p = [x+ y*sizex + z*size*xsizey] in the array of voxels in host memory, where p is the offset for voxel (x,y,z) from the volume origin.

During operation, portions of the volume 138 are transferred over the PCI bus or host data path 208 to the VGB 140 for rendering. In particular, the voxel data is transferred from the PCI-bus 208 to the voxel memory 100 by a Volume Rendering Module (VRC) 202.

The VRC 202 includes all logic necessary for performing real-time interactive volume rendering operations. In one embodiment, the VRC 202 includes *N* interconnected rendering pipelines such as those described with regard to Figures 5A and 5B. Each processing cycle, *N* voxels are retrieved from voxel memory 100 and processed in parallel in the VRC 202. By processing *N* voxels in parallel, real-time interactive rendering data rates may be achieved. A more detailed description of one embodiment of the VRC and its operation are provided later herein.

In addition to voxel memory 100, the video graphics board (VGB) 140 also includes section memory 204 and pixel memory 200. Pixel memory 200 stores pixels of the image generated by the volume rendering process, and the section memory 204 is used to store intermediate data generated during rendering of the volume data set by the VRC 204. The memories 200, 202 and 204 include arrays of synchronous dynamic random-access memories (SDRAMs) 206. As shown, the VRC 202 interfaces to buses V-Bus, P-Bus, and S-Bus to communicate with the respective memories 200, 202 and 204. The VRC 202 also has an interface for the industry-standard PCI bus 208, enabling the volume graphics board to be used with a variety of common computer systems.

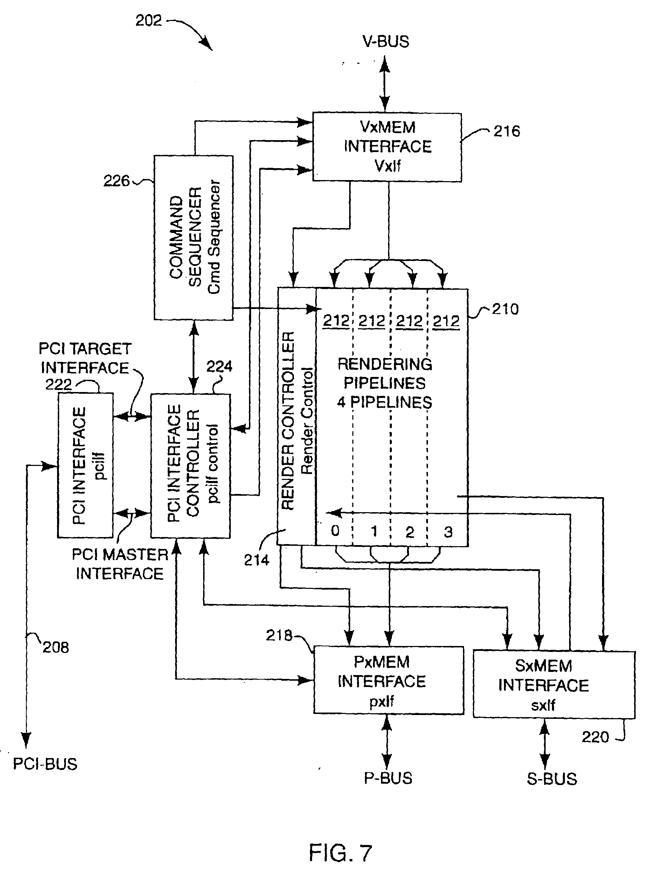

A block diagram of the VRC 202 is shown in Figure 7. The VRC 202 includes a pipelined processing element 210 having 4 parallel rendering pipelines 212. Each pipeline may have processing stages coupled like those in Figures 5A or 5B) and a render controller 214. The processing element 210 obtains voxel data from the voxel memory 100 via voxel memory interface logic 216, and provides pixel data to the pixel memory 200 via pixel memory interface logic 218. A section memory interface 220 is used to transfer read and write data between the rendering engine 210 and the section memory 204 of Figure 6. A PCI interface 222 and PCI interface controller 224 provide an interface between the VRC 202 and the PCI bus 208. A command sequencer 226 synchronizes the operation of the processing element 210 and voxel memory interface 216 to carry out operations specified by commands received from the PCI bus. The data path along which the voxels travel from the voxel memory to their destination pipelines are termed memory channels.

The four pipelines 212-0- 212-3 operate in parallel in the x-direction, i.e., four voxels $V_{(x0),y,z}$, $V_{(x1),y,z}$, $V_{(x2),y,z}$, $V_{(x3),y,z}$ are operated on concurrently at any given stage in the four pipelines 212-0- 212-3. The voxels are supplied to the pipelines 212-0-212-3, respectively via the memory channels, in 4-voxel groups in a scanned order in a manner described below. All of the calculations for data positions having a given x-coefficient modulo 4 are processed by the same rendering pipeline. Thus it will be appreciated that to the extent intermediate values are passed among processing stages within the pipelines 212-0 for calculations in the y-and z-direction, these intermediate values are retained within the rendering pipeline in which they are generated and used at the appropriate time. Intermediate values for calculations in the x-direction are passed from each pipeline (for example 212-0) to a neighboring pipeline (for example, 212-1) at the appropriate time. The section memory interface 220 and section memory 204 of Figure 6 are used to temporarily store intermediate data results when processing a section of the volume data set 10, and to provide the saved results to the pipelines when processing another section. Sectioning-related operation is described in greater detail below.

Volume Rendering Data Flow

The rendering of volume data includes the following steps. First, the volume data set is transferred from host memory 134 to the volume graphics board 140 and stored in voxel memory 100. In one embodiment, voxels are stored in voxel memory as mini-blocks. Each processing cycle, $N$ voxels are retrieved from voxel memory (where $N$ corresponds to the number of parallel pipelines in the VRC) and forwarded to corresponding ones of the $N$ dedicated pipelines.

The voxels are processed a section at the time, each section is processed a slice at the time, and within slices by beams. Each of the pipelines buffers voxels at a voxel, beam and slice granularity to ensure that the voxel data is immediately available to the pipeline for performing interpolation or gradient estimation calculations for neighboring voxels, received at different times at the pipeline.

Data is transferred between different stages of the pipelines to like stages of neighboring pipelines in only one direction. The output from the pipelines comprises two-dimensional display data, which is stored in a pixel memory and transferred to an associated graphics display card either directly or through the host. Each of these steps is described in more detail below.

Sectioning a volume data set

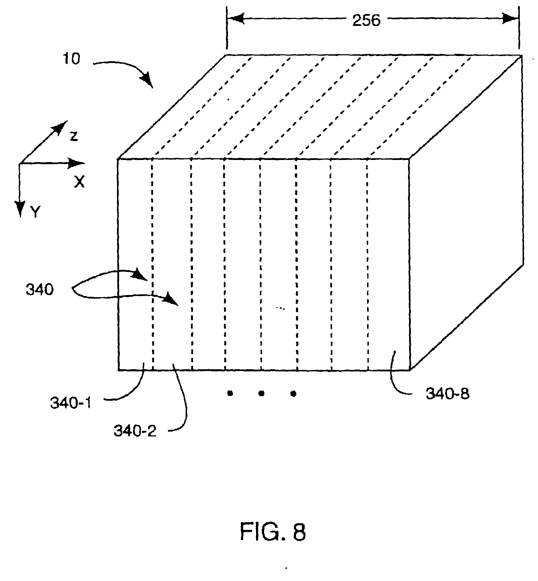

In one embodiment, the volume data set is rendered a section at the time. Figure 8 illustrates the manner in which the volume data set 10 is divided into "sections" 340 for the purpose of rendering, in the x-direction. Each section 340 is defined by boundaries, which in the illustrated embodiment include respective pairs of boundaries in the x-, y- and z-dimensions. In the case of the illustrated x-dimension only sectioning, the top, bottom, front and rear boundaries of each section 340 coincide with corresponding boundaries of the volume data set 10 itself Similarly, the left boundary of the left-most section 340-1 and the right boundary of the right-most section 340-8 coincide with the left and right boundaries respectively of the volume data set 10. All the remaining section boundaries are boundaries separating sections 340 from each other.

In the illustrated embodiment, the data set 10 is, for example, 256 voxels wide in the x-direction. These 256 voxels are divided into eight sections 340, each of which is exactly thirty-two voxels wide. Each section 340 is rendered separately in order to reduce the amount of buffer memory required within the processing element 210 because the size of buffers is proportional to the number of voxels in a slice.

In the illustrated embodiment, the volume data set 10 may be arbitrarily wide in the x-direction provided it is partitioned into sections of fixed width. The size of the volume data set 10 in the y-direction is limited by the sizes of the FIFO or delay buffers, such as buffers 106 and 114 of Figure 5A, and the size of the volume data set 10 in the z-direction is limited by the size of a section memory which is described below.

Note, however, that the limitations apply to permuted coordinates, as such, for a different *view* direction, the limitations apply to different object axes. Therefore, as a practical matter, the volume is cubic.

Transferring the Volume Data set from Host Memory to the VGB

Referring back again to Figure 6, in one embodiment, the transfer of voxels between host memory 134 and voxel memory 100 is performed using a Direct Memory Access (DMA) protocol. For example, voxels may be transferred between host memory 134 and voxel memory 100 via the host data path or PCI bus 208 with the VRC 202 as the bus master (for DMA transfers) or the bus target.

There are generally four instances in which voxels are transferred from host memory 134 to voxel memory 100 via DMA operations. First, an entire volume object in host memory 134 may be loaded as a complete volume in voxel memory 100. Second, an entire volume object in host memory 134 may be stored as a subvolume in voxel memory 100, although this is an unlikely event. A subvolume is some smaller part of an entire volume that normally cannot be processed in one rendering pass. Third, a portion, or sub-volume of a volume object in host memory 134 may be stored as a complete object in voxel memory 100. Alternatively, a portion or subvolume of a volume object on the host memory 134 is stored as a subvolume in voxel memory.

Transferring a complete volume from host memory 134 to voxel memory 100 may be performed using a single PCI bus master transfer, with the starting location and the size of the volume data set specified for the transfer in a single transfer command. To transfer a portion or subvolume of a volume data set in host memory to voxel memory, a set of PCI bus master transfers are used, because adjacent voxel beams of the host volume may not be stored contiguously in the host memory.

A number of registers are provided in the host and render controller 214 to control the DMA transfers between the host 130 and the VGB 140. These registers include a Vx_HOST_MEM_ADDR register, for specifying the address of the origin of the volume in host memory, a Vx_HOST_SIZE register for indicating the size of the volume in host memory, a Vx_HOST_OFFSET register, for indicating an offset from the origin at which the origin of a subvolume is located, and a Vx_SUBVOLUME_SIZE register, describing the size of the subvolume to be transferred. Registers Vx_OBJECT_BASE, Vx_OBJECT_SIZE, Vx_OFFSET and Vx_SUBVOLUME_SIZE provide a base address, size, offset from the base address and sub-volume size for indicating where the object from host memory is to be loaded in voxel memory.

Transfers of rendered volume data set from voxel memory to the host memory is performed using the registers described above and via DMA transfers with the host memory 134 as the target.

Storing Voxels in Voxel Memory Mini-blocks

In one embodiment, voxel memory 100 is organized as a set of four Synchronous Dynamic Random Access Memory modules (SDRAMs) operating in parallel. Each module can include one or more memory chips. It should be noted that more or less modules can be used, and that the number of modules is independent of the number of pipelines. In this embodiment, 64 Mbit SDRAMs with 16 bit wide data access paths may be used to provide burst mode access in a range of, for example, 125-133 MHz. Thus, the four modules provide 256 Mbits of voxel memory, sufficient to store a volume data set of 256x256x256 voxels at, for example, sixteen bits per voxel. In one embodiment, voxel data is arranged as mini-blocks in the voxel memory.

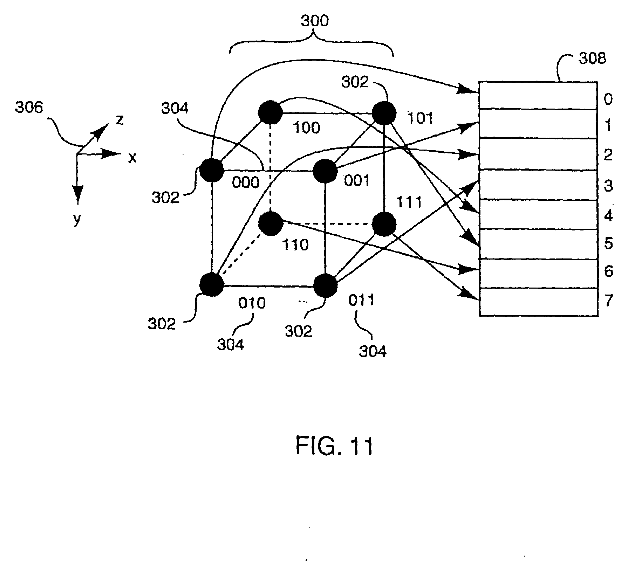

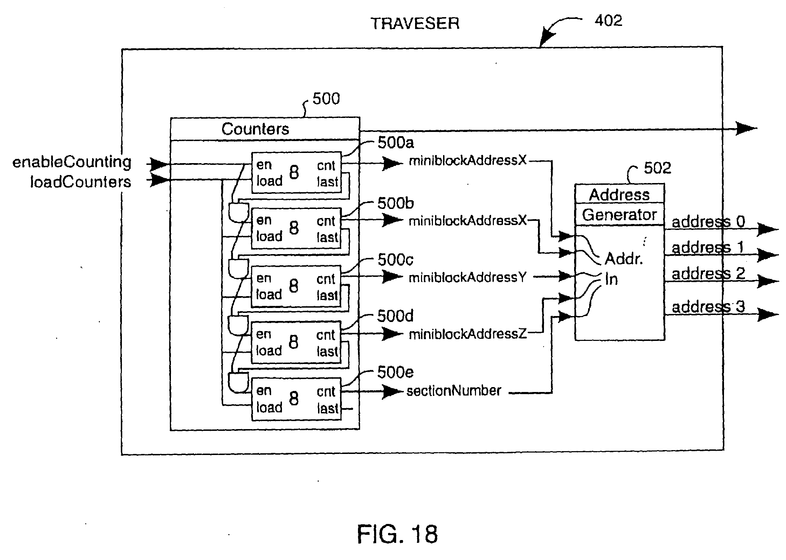

Figure 11 illustrates an array 300 of eight neighboring voxels 302 arranged in three-dimensional space according to the coordinate system of their axes 306, here expressed in permuted object space. Note that in the examples provide below, the conversion between the object coordinates (u,v,w) and the permuted coordinate system (x,y,z), i.e., taking into account the view direction, is done using a *transform* register. How the address translation occurs is described in more detail later herein with reference to Figures 18-21 below.

The data values of the eight voxels 300 are stored in an eight-element array 308 in one memory module of the voxel memory 100. Each voxel occupies a position in three-dimensional space denoted by coordinates (x, y, z), where x, y, and x are all integers. The index of a voxel data value within the memory array of its mini-block is determined from the lower order bit of each of the three x, y, and z-coordinates. As illustrated in Figure 11, these three low-order bits are concatenated to form a three-bit binary number 304 ranging in value from zero to seven, which is then utilized to identify the array element corresponding to that voxel. In other words, the array index within a mini-block of the data value of a voxel at coordinates (x, y, z) is given by Equation II:

Equation II:

$$(X \bmod 2) + 2 \times (Y \bmod 2) + 4 \times (Z \bmod 2).$$

Just as the position of each voxel or sample can be represented in three dimensional space by coordinates (x, y, z), so can the position of a mini-block be represented be represented in mini-block coordinates ($x_{mb}$, $y_{mb}$, $z_{mb}$). In these coordinates, $x_{mb}$ represents the position of the mini-block along the *x*-axis, counting in units of whole mini-blocks. Similarly, $y_{mb}$ and $z_{mb}$ represent the position of the mini-block along the y-and z-axes, respectively, counting in whole mini-blocks. Using this notation of mini-block coordinates, the position of the mini-block containing a voxel with coordinates (x, y, z) is given by Equation III:

Equation III:

$$X_{mb} = \left\lfloor \frac{X}{2} \right\rfloor, \quad Y_{mb} = \left\lfloor \frac{Y}{2} \right\rfloor, \quad Z_{mb} = \left\lfloor \frac{Z}{2} \right\rfloor.$$

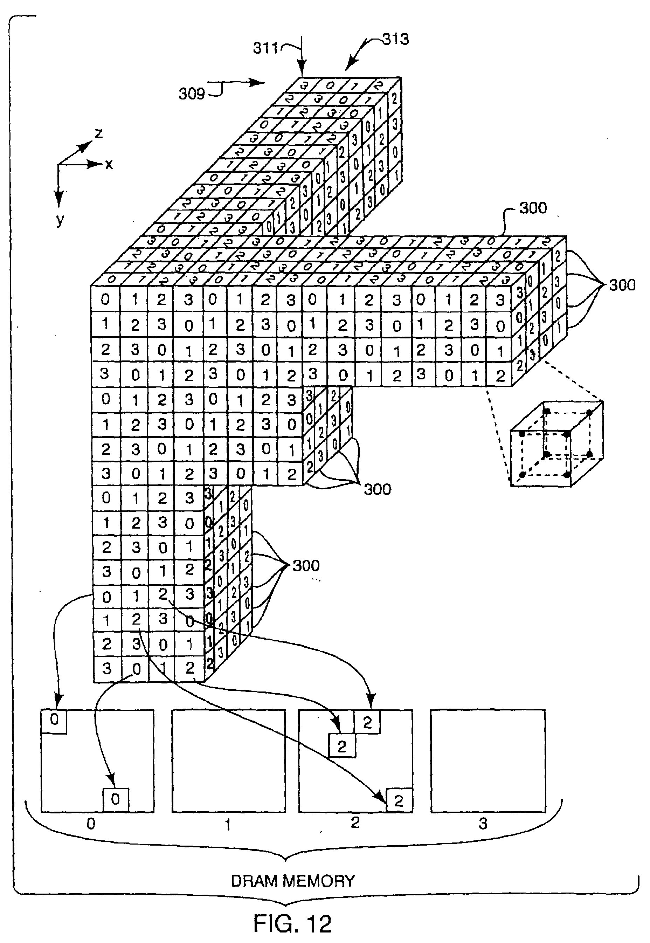

In one embodiment of the invention, mini-blocks are skewed such that consecutive mini-blocks in the volume data set, in either the x, y, or z-dimension, are stored in different ones of the four SDRAM modules of the voxel memory. Referring now to Figure 12, the first level of mini-block skewing is illustrated. The DRAM number of a mini-block having voxel coordinates of (x,y,z) is provided below in Equation IV:

Equation IV:

$$DRAMNumber = \left( x_{mb} + y_{mb} + z_{mb} \right) \bmod 4,$$

In Figure 12, a partial view of a three-dimensional array of mini-blocks 300 is illustrated. Each mini-block is depicted by a small cube labeled with a small numeral. The numeral represents the assignment of that mini-block to a particular DRAM module. In the illustrated embodiment, there are four different DRAM modules labeled 0, 1, 2, and 3. It will be appreciated from the figure that each group of four mini-blocks aligned with an axis contains one mini-block with each of the four labels.

This can be confirmed from Equation IV. That is, starting with any mini-block at coordinates $(x_{mb}, y_{mb}, z_{mb})$, and sequencing through the mini-blocks in the direction of the x-axis, the *DRAMNumber* of Equation IV cycles continually through the numbers 0, 1, 2, and 3. Likewise, by sequencing through the mini-blocks parallel to the y-or z-axis, Equation IV also cycles continually through the *DRAMNumbers* 0, 1, 2, and 3. Therefore, it will be appreciated that when traversing the three-dimensional array of mini-blocks in any direction 309, 311, or 313 parallel to any of the three axes, groups of four adjacent mini-blocks can always be fetched in parallel from the four independent memory of the DRAM modules. The assignment of mini-blocks to memory locations within a memory module is discussed below.

More generally, if a system contains *M* independent memory modules, then the mini-block with coordinates $(x_{mb}, y_{mb}, z_{mb})$ is assigned to a memory module as indicated by Equation V below:

Equation V:

$$ModuleNumber = \left( x_{mb} + y_{mb} + z_{mb} \right) \bmod M.$$

That is, if the memory subsystem of the illustrated embodiment comprises *M* separate modules such that all *M* can be accessed concurrently in the same amount of time required to access one module to achieve parallelism, then the assignment of a mini-block to a memory module is given by summing the coordinates of the mini-block, dividing by *M* and taking the remainder.

This guarantees that any group of *M* blocks aligned with any axis can be fetched concurrently. It will be appreciated that the requirement for fetching groups of *M* mini-blocks concurrently along any axis of the volume data set is because order of traversal of the volume data set is dependent upon the view direction.

Although in the illustrated embodiment, mini-blocks are accessed in linear groups aligned with the axes of the volume data set, it will be appreciated that other embodiments may skew mini-blocks by different formulas so that they can be fetched in rectangular groups, cubic groups, or groups of other size and shape, independent of the order of traversal of the volume data set.

Organization into Banks of Memory

In modern DRAM modules, it is possible to fetch data from or write data to the DRAM module in "bursts" of modest size at the clock rate for the type of DRAM. Typical clock rates for Synchronous DRAM or "SDRAM" modules include 133 MHz, 147 MHz, and 166 MHz, corresponding 7.5 nanoseconds, 7 nanoseconds, and 6 nanoseconds per cycle, respectively.

Typical burst sizes needed to sustain the clock rate are five to eight memory elements of sixteen bits each. Other types of DRAM under development have clock rates up to 800 MHz and have typical burst sizes of sixteen data elements of sixteen bits each. In these modern DRAM modules, consecutive bursts can be accommodated without intervening idle cycles, provided that they are from independent memory banks within the DRAM module. That is, groups of consecutively addressed data elements are stored in different or non-conflicting memory banks of a DRAM module, then they can be read or written in rapid succession, without any intervening idle cycles, at the maximum rated speed of the DRAM.

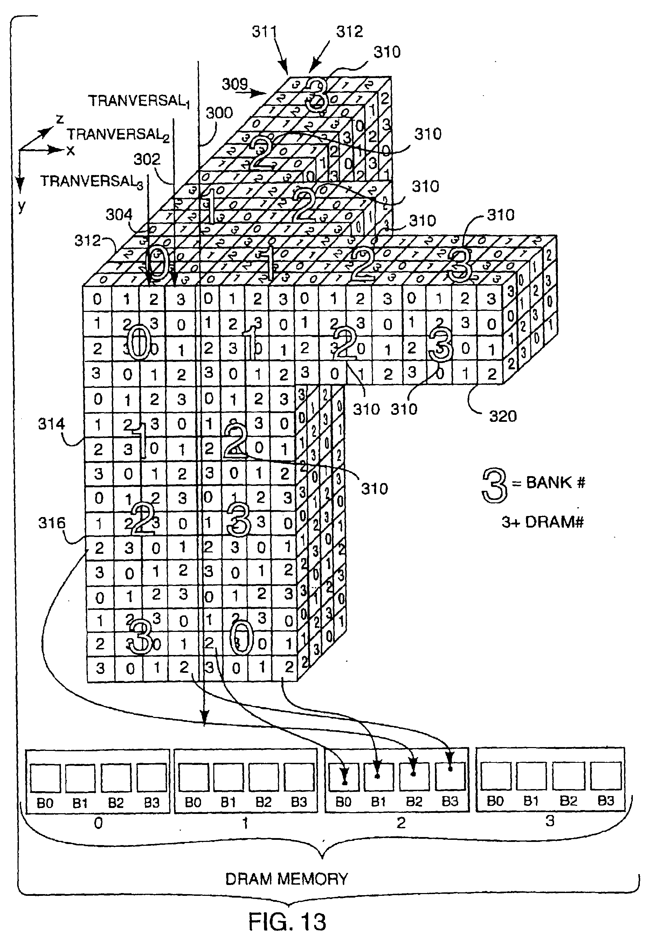

Referring now to Figure 13, the mini-blocks are further arranged in groups corresponding to banks of the DRAMs. This constitutes the second level of voxel skewing. Each group of 4×4×4 mini-blocks is labeled with a large numeral. Each numeral depicts the assignment of each mini-block of that group to the bank with the same numeral in its assigned DRAM module. For example, the group of mini-blocks 312 in the figure is labeled with numeral 0. This means that each mini-block within group 312 is stored in bank 0 of its respective memory module. Likewise, all of the mini-blocks of group 314 are stored in bank 1 of their respective memory modules, and all of the mini-blocks of group 316 are stored in bank 2 of their respective memory modules.

In the illustrated embodiment, each DRAM module has four banks, labeled 0, 1, 2, and 3. A mini-block with coordinates ($x_{mb}$, $y_{mb}$, $z_{mb}$) is assigned to the bank according to Equation VI below:

Equation VI:

$$BankNumber = \left( \left\lfloor \frac{X_{mb}}{4} \right\rfloor + \left\lfloor \frac{Y_{mb}}{4} \right\rfloor + \left\lfloor \frac{Z_{mb}}{4} \right\rfloor \right) \bmod 4.$$

The fact that the number of banks per DRAM module is the same as the number of DRAM modules in the illustrated embodiment is a coincidence. Other embodiments can have more or less module modules, and each module can have more or less banks.

It will be appreciated from the figure that when a set of pipelined processing elements traverses the volume data set in any given orthogonal direction, fetching four mini-blocks at a time in groups parallel to any axis, adjacent groups, such as Group 0 and Group 1, are always in different banks. This means that groups of four mini-blocks can be fetched in rapid succession, taking advantage of the "burst mode" access of the DRAM modules, and without intervening idle cycles on the part of the DRAM modules, for traversal along any axis. This maximizes the efficiency of the DRAM bandwidth.

More generally, the assignment of mini-blocks to memory banks can be skewed in a way similar to the assignment of mini-blocks to memory modules. In other words, mini-blocks can be skewed across M memory modules so that concurrent access is possible no matter which direction the volume data set is being traversed. Likewise, mini-blocks within each module can be skewed across B memory banks, so that accesses to consecutive mini-blocks within a bank are not delayed by intervening idle cycles. This forms a two-level skewing of mini-blocks across modules and banks. In the illustrated embodiment, the assignment of a mini-block to a memory bank is given by Equation VII below:

Equation VII:

$$BankNumber = \left( \left\lfloor \frac{X_{mb}}{M} \right\rfloor + \left\lfloor \frac{Y_{mb}}{M} \right\rfloor + \left\lfloor \frac{Z_{mb}}{M} \right\rfloor \right) \bmod B.$$

It will be appreciated, however, that other embodiments may skew mini-blocks across banks by other rules, for example by skewing in each dimension by a different distance such that the distances in the three dimensions are relatively prime to each other.

Traversal of the Volume during Rendering

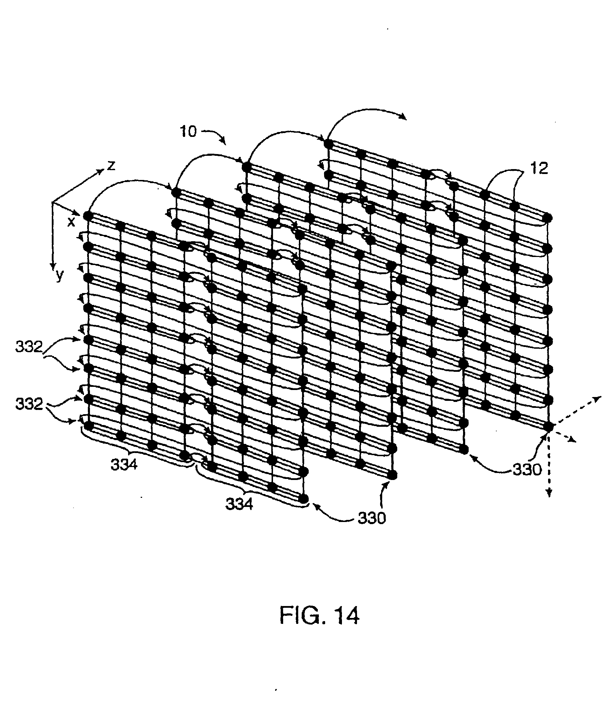

Although the voxels are arranged in voxel memory as mini-blocks, they are processed in a slice/beam order. Referring now to Figure 14, a description of what is meant by slice/beam order is provided. As described above with reference to Figure 8, the volume data set 10 is processed as parallel "slices" 330 in the z-direction, which as described above is the axis most nearly parallel to the view direction. Each slice 330 is divided into "beams" 332 in the y-direction, and each beam 332 consists of a row of voxels 12 in the x-direction. The voxels 12 within a beam 332 are divided into groups 334 of voxels 12 which as described above are processed in parallel by the four rendering pipelines 212.

In the illustrative example, the groups 334 consist of four voxels along a line in the x-dimension. The groups 334 are processed in left-to-right order within a beam 332; beams 332 are processed in top-to-bottom order within a slice 330; and slices 330 are processed in order front-to-back. This order of processing corresponds to a three-dimensional scan of the data set 10 in the x, y, and z-directions. It will be appreciated that the location of the origin and the directions of the x, y, and z-axes can be different for different view directions.

Although in Figure 14, the groups 334 are illustrated as linear arrays parallel to the x-axis, in other embodiments the groups 334 may be linear arrays parallel to another axis, or rectangular arrays aligned with any two axes, or parallelepipeds. Beams 332 and slices 330 in such other embodiments have correspondingly different thicknesses. For example, in an embodiment in which each group 334 is a 2x2x2 rectangular mini-block, the beams 332 are two voxels thick in both the y-and z-dimensions, and the slices 330 are 2 voxels thick in the z-dimension. The method of processing the volume data set described herein also applies to such groupings of voxels.

Voxel Memory Interface

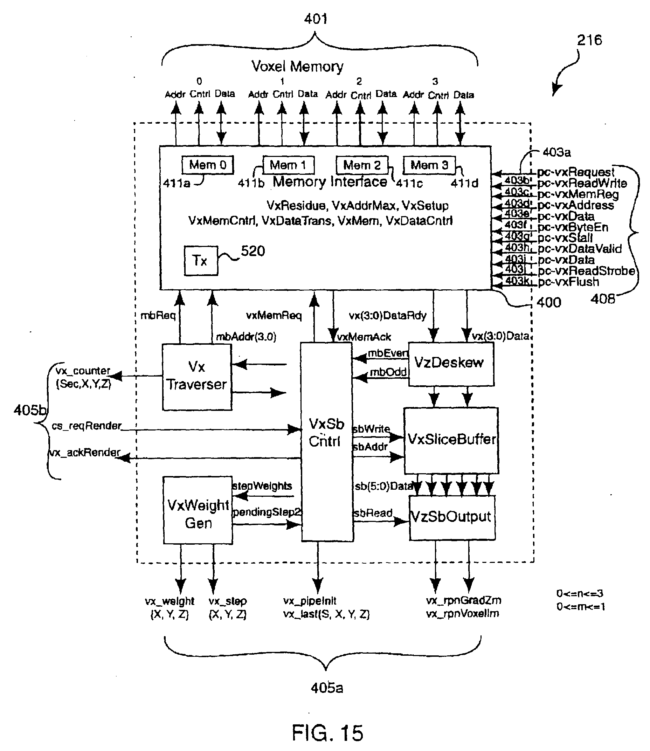

The writing of voxels to voxel memory 100 in skewed mini-block format and the processing of voxels in a slice/beam order by the pipelines is controlled by the voxel memory interface 216 (Figure 7). The memory interface is part of the memory-to-pipeline memory channel. A block diagram of one embodiment of the voxel memory interface 216 (VxIf) is showing in Figure 15. As illustrated in Figure 6, the voxel memory is located between the rendering pipelines of VRC 202 and voxel memory 100.

The voxel memory interface 216 controls the reading of voxels from voxel memory and the rearrangement of the voxels so that they are presented to the rendering pipelines in the correct order for rendering. The data sent to the pipelines via the memory channels includes voxel data from two adjacent slices, z-gradients corresponding to those slices, and control information. The VxIf also includes an interface to the PCI controller in the VRC 202, and the VxIf implements read and write cycles initiated by host-to-voxel memory traffic.

The VxIf 216 includes a memory interface 400, a traverser 402, a weight generator 404, a deskewer (VxDeskew) 408, a slice buffer (VxSliceBuffer) 410, an output unit (VxSbOutput) 412 and a controller (VxSbCntrl) 406.

The memory interface 400 includes four memory interfaces, one for each of the four respective SDRAM modules of voxel memory. The fact that the number of modules and the number of pipelines are the same is purely coincidental. The weight generator 404 computes weights that represent the offset, from the voxel grid, of the rays as they pass through a particular slice of voxels. The deskewer 408 rearranges the skewed order of voxels received from banks of SDRAM of voxel memory so that the eight voxels are ordered in mini-block order. The traverser 402 controls the order in which addresses are dispatched to the voxel memory. The slice buffer 410 includes a number of buffers that are used to temporarily store data retrieved from voxel memory, and to rearrange the voxels from mini-block order to the appropriate beam/slice order. The output unit 412 and controller 406 forward voxel data from the voxel memory interface to the rendering pipelines 212a-212d. The memory interfaces 411a-411d, traverser 402, deskewer 408 and slice buffer 410 which form the operative part of the memory channels are described in more detail below.

Memory Controller

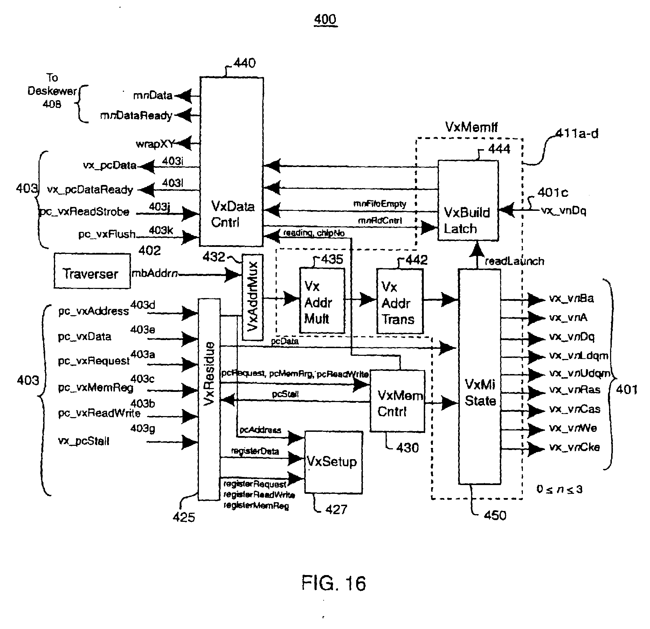

Referring now briefly to Figure 16, a block diagram of one embodiment of a memory controller 400 is shown. The memory controller 400 includes a host datapath 403 for transferring address, control and data, received from the host via the PCI data bus 208 and the VRC 202, respectively, to voxel memory 100. Thus, this datapath is used to forward data to the voxel memory from host memory. The PCI interface requests reads or write cycles to voxel memory through pc_vxRequest signal 403a, pc_vxMemReg signal 403c and pc_vx_ReadWrite signal 403b. An access is made to voxel memory when pc_vxMemReg and pc_vx_Request are both high. The lines pf the host path 403 are coupled to each individual memory interfaces 411a-d. The memory controller decodes addresses provided on pc_vxAddress bus 403d and pc_vxByteEn 403f.

Address, data and control signals are forwarded to VxResidue 425 from the VRC 202. In addition, a stall signal vx_pcStall is held in the register 425. The register is used to provide an extra stage of logic before the stall signal is forwarded to the VRC 202. The VxResidue circuit 425 contains logic needed to be able to align write data for unaligned access. Addresses and data and control from the PCI interface are also be forwarded to VxSetup registers 427.

VxSetup registers 427 include a number of front end registers that are used for rendering an object. These registers include the following: RENDER_OBJECT_SIZE, RENDER_OBJECT_BASE, Vx_OBJECT_SIZE, Vx_OBJECT_BASE, transform, leftx, lefty, topy, bottomy, frontz, backz, leftSection and rightSection among others. In one embodiment, the registers are all write-only and for each register there are two sets of storage, active and pending. The various uses of the contents of each of these registers is described in more detail below.

The PCI address is forwarded to VxAddrMux 432 which operates as an address selector. The VxAddrMux 432 selects between the PCI address (which is used during initial write operations) and an address provided by the traverser 402 (Fig. 16). The traverser 402, as will be described in more detail below, provides successive addresses starting at an origin address and incrementing along a given plane. Thus, the traverser is an automatic address generator that is used to read voxels from voxel memory in bursts of eight.

The selected address is then forwarded to a multiplier (VxAddrMult 435) and an address translator (VxAddrTrans 442). The addresses received from both the traverser and the PCI interface are logical addresses provided in x,y,z coordinates, where x,y, and z are three-dimensional coordinates voxels of a volume stored in host memory having an origin (x,y,z) = (0,0,0). The addresses received from the traverser are already mini-block relative. However, the addresses received from the PCI interface are voxel relative.

To compute the physical address in voxel memory from the x, y-and z-coordinates provided from the multiplexer 432, when the coordinates are provided by the PCI interface, the coordinates are converted to mini-block coordinates $x_{mb}$, $y_{mb}$, $z_{mb}$ by removing the least significant bit from each of the coordinate. Once the mini-block relative coordinates are ascertained (whether they be from the traverser or from the PCI interface), the SDRAM address is then determined by the VxAddrMult 435 and the VxAddrTrans 442 as follows. The SDRAM number is determined using above Equation V. The bank address of the SDRAM associated with the mini-block is determined using above Equation VII.

The row address within the bank is determined using below Equations VIIIa - VIIIc:

$$\text{Relative row address} = (x_{mb} + y_{mb}*Sizex + z_{mb} * Sizex*Sizey), \qquad \text{Equation VIIIa}$$

where Sizex is the number of mini-blocks in the x-plane and Sizey is the number of mini-blocks in the y-plane. In one embodiment, wherein the volume is a parallelepiped with the Sizex = Size y = Sizez , the size of the volume in each dimension is stored in a register Vx_OBJECT_SIZE (if the address is from the PCI interface) or a register RENDER_OBJECT_SIZE (if the address is from the traverser) in the setup registers 427 of memory interfaces 411a-411d.

$$\text{Absolute row address} = \text{relative row} + \text{base offset}, \qquad \text{Equation VIIIb}$$

where the base offset is stored in either a register Vx_OBJECT_BASE (if the address is from the PCI interface) or a register RENDER_OBJECT_BASE (if the address is from the traverser) in the setup registers 427 of the memory interfaces 411a-411d.

$$\text{Row address to SDRAMs} = \text{absolute row}/512, \qquad \text{Equation VIIIc}$$

where the 512 is dependent on the row size of a particular SDRAM. This divide computation can easily be done by a shift of (nine) bit positions.

The column addresses are generated as follows. For reads, when the address is provided from the traverser, since accesses are always made in bursts of eight reads, the lower three bits of the column address are zero. For writes, when the address is from the PCI interface, the lower order bits of the column address are determined as shown below in Equation IX:

$$\text{Column}[2] = z[0], \text{column}[1] = y[0], \text{column}[0] = x[0] \qquad \text{Equation IX}$$

The remaining bits of the column address are determined according to Equation X below:

$$\text{column} (7:3) = \text{row}(8:4) \qquad \text{Equation X}$$

The address, whether from the traverser or from the PCI interface, is forwarded to the voxel controller state machine (VxMiState) 450. The voxel controller state machine 450 operates in response to the address received from the VxAddrTrans 442 and the requests received from the VxMemCntrl 430 to properly assert control signals 401 of the SDRAMs to performs reads, writes and refreshes of the voxel memory. Write data is forwarded to the voxel memory on line 401d, while read data is obtained from voxel memory on line 401e. Received data is collected in the controller at VxBuildLatch 444.

There are two output ports from the memory controller. The first output port is to the PCI interface, and thus data is forwarded on lines 403h- 403j to the PCI interface in the VRC 202. The second output port is to the deskewer 408. Data is forwarded from the build latch to the deskewer 408 for later forwarding to the rendering pipeline (after storage in the slice buffers) as will be described later herein.

Voxel Memory State Machine

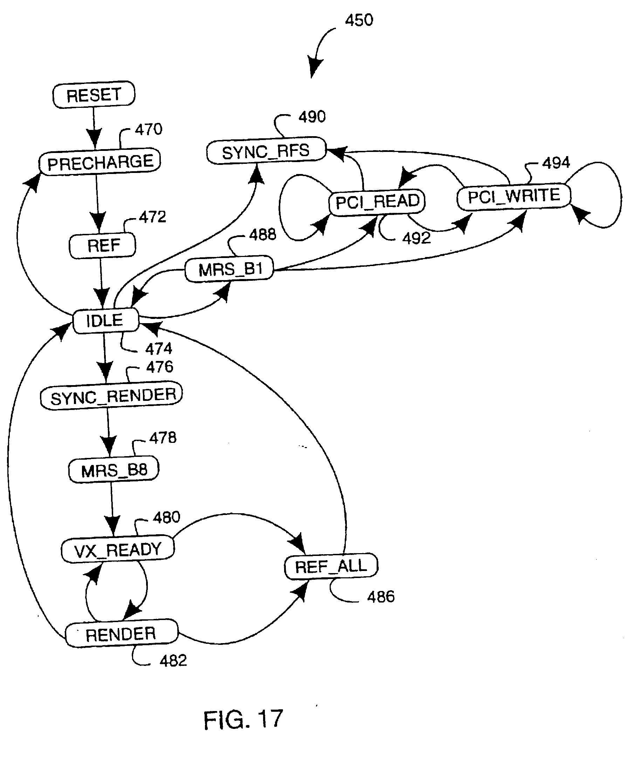

Referring now briefly to Figure 17, a state diagram of the voxel state machine 450 will first be described. The state machine 450 receives and processes requests from the different sources of voxel memory traffic and issues specific commands to the different independent memory interfaces. The requests include render requests, read and write requests, and maintenance requests. The render requests synchronously transfers voxels from the memory modules to the rendering pipelines. The read and write requests asynchronously transfer data between the host and voxel memories. The maintenance requests refresh and precharge the memories.

The order in which the requests are processed is based on a priority of the request, from highest to lowest and in the following order: power up sequence at start up only, and while the system is operational, render request, maintenance request and read/write requests. Thus, rendering is the highest priority task during operation, and will always take precedence over maintenance requests, and read or write requests.

As shown in Figure 17, after a reset, the state machine proceeds to PRECHARGE state 470, where the row and column lines of the SDRAMs are precharged in a standard SDRAM precharge cycle. The state machine then proceeds to REF state 472, where a refresh cycle is performed.

The state machine then proceeds to IDLE state 474, wherein it remains until either a time-out causes the state machine to return to the PRECHARGE state 470, or until the state machine receives a request.

If the request is a read or write request, then the state machine proceeds to state MRS_B1 488, where a BURST_MODE register is written to a value of one, and the request is decoded. The PCI_READ state 492 performs the read, and the PCI_WRITE state 494 the write. The state machine remains in this states until all data is returned, and then proceeds to state SYNC_RFS 490, and then PRECHARGE 470.

If a render request is received, then the state machine proceeds to SYNC_RENDER state 476. In the SYNC_RENDER state, the state machine waits until all memory interfaces are idle, and then proceeds to MRS_B8 state 478, where the BURST_MODE register is written with the value of eight. The state machines then proceeds to Vx_READY state 480.

In Vx_READY state 480, the circuit is ready to render and the state machine proceeds to RENDER state 482. At RENDER state 482, the appropriate signals are forwarded to the SDRAM to perform a burst mode read of eight voxels, and the state machine returns to Vx_READY state 480. The state machine stays in the Vx_READY state 480 until the burst mode read has completed, and, if there is more to read, then the state machine cycles between states 482 and 480 until the entire render request has been completed.

When the render request has been completed, the state machine proceeds from Vx_READY state 480 to REF_ALL state 486, where all of voxel memory is refreshed. The state machine then returns to IDLE state 474, where it awaits receipt of a next request or a precharge cycle.

Thus, the state machine provides a mechanism for handling both PCI reads and write and burst mode render operations, while supporting refresh and precharge requirements of the SDRAMs.

By giving priority to render requests over PCI read and write requests, the state machine can assure that real-time rendering rates are maintained.

Referring back to Figure 15, some of the remaining components of the voxel memory interface will now be described.

Transformation of Coordinates

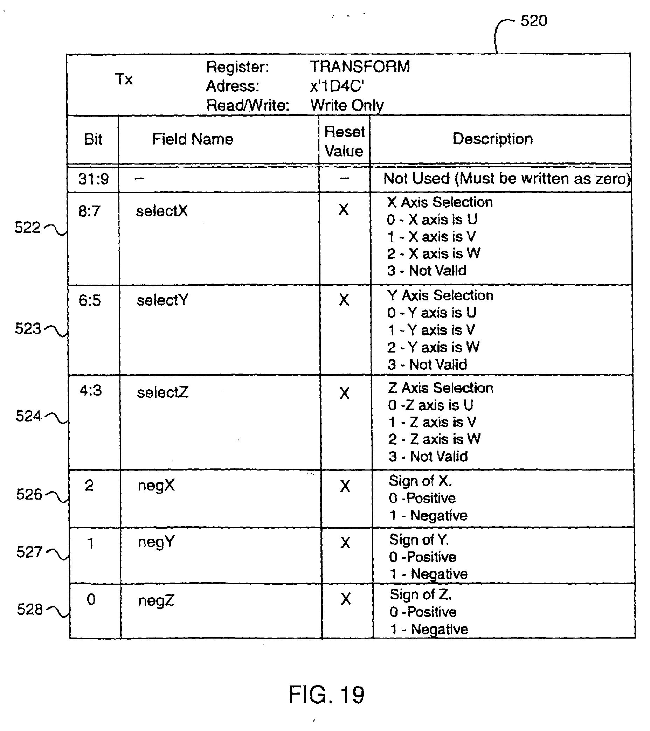

The traverser 402 is responsible for providing addresses associated with render requests of mini-blocks to the voxel memory interface 400 in the correct order based on the view direction. According to one embodiment of the invention, the traverser uses a *transform* register 520, see Figure 19, to transform the addresses of the voxel element from the object coordinate system into addresses of voxels in the permuted coordinate system, that is where the volume has been repositioned according to the view direction. Performing this translation at the memory interfaces provides an easy method of changing views of the volume without having to actually alter the contents of memory.

Referring now to Figure 18, a block diagram of one embodiment of the traverser 402 is shown to include counters 500 and address generation logic 502. The counters 500 generate mini-block coordinates for the leftmost mini-block of a partial mini-block beam. While the counters hold object coordinates in (u,v,w) space, they are incremented or decremented as they traverse an object in x,y,z order. This performs part of the transformation from object (u,v,w) space (where the origin of a volume is located at one corner of the volume, typically a starting point from the object's own point of view) to a permuted (x,y,z) space (where the origin of the object is repositioned to be the vertex of the volume nearest to the image plane, and the z-axis is the edge of the volume most nearly parallel to the view direction).

The traversal order follows the x, then y, then z, then section order. The u, v, and w coordinates are loaded into the x, y-and z-counters based on the chosen view direction and the mappings selected in the transform register 520 of the memory controller. The transform register is used to transform the addresses of the volume data set depending upon the view direction. Thus, the transform register may be used to convert the logical origin of the volume from object to permuted coordinates.

Figure 19 shows exemplary mapping data stored in the transform register 520. The mapping data, which maps between the object coordinate system and the permuted coordinate system as shown in Figure1, includes selectx field 522, selecty field 523 and selectz field 524. Using the selectx, selecty and selectz fields, the u coordinate can be mapped to x, y-or z-plane, as can the v and w coordinates. In addition, transform matrix includes negx field 526, negy field 527 and negz field 528. Fields 526-528 are used to provide an increment count for the counters of each of the respective x, y-and z-dimensions. In essence, the voxels in the volume may be rotated or flipped in any of the three dimensions based on the contents of the transform register 520.

Referring back to Figure 18, the counters 500 of the traverser 402 include a count to eight counter 500a, an x-dimension counter 500b, a y-dimension counter 500c, a z-dimension counter 500d and a section counter 500e.

As mentioned above, the increment value for each of the counters are based upon the negx, negy and negz fields of the transform register 520. For example, if the field of negx is set to a one, the increment value would be a-1, otherwise it would be a +1.

The leftX, leftX, righty, bottomy, frontZ, backZ and leftSection, rightSection values from the Setup registers 427 define the voxel coordinates of the volume data set in voxel memory. These values are used to compute initial and final values for each of the counters as mini-block addresses. During each cycle in one embodiment, partial mini-block "beam" units (comprising four mini-blocks) are forwarded to the address generator 502. The address generator 502 converts the partial mini-block beam coordinates into four distinct mini-block addresses for each of the mini-blocks in the beam. These four addresses point to four corresponding mini-blocks in each of the four SDRAMs. Using these coordinates, the address generator forwards addresses to each of the four memory modules to retrieve the mini-blocks.

Deskewer

Each mini-block is read as a set of consecutive memory addresses from its memory module and bank using the addresses generated by the traverser. It will be appreciated that, because of the skewing of mini-blocks during the write process (described above with regard to Equations II-VIII), the order of voxel values provided in a mini-block read does not necessarily correspond to the order in which voxels are processed. To take account for this situation, a method of deskewing using a deskewer is introduced as follows.

Each read cycle of the four SDRAMs provides thirty-two voxels in bursts of eight, the deskewer receives four mini-blocks of data in each burst read cycle.

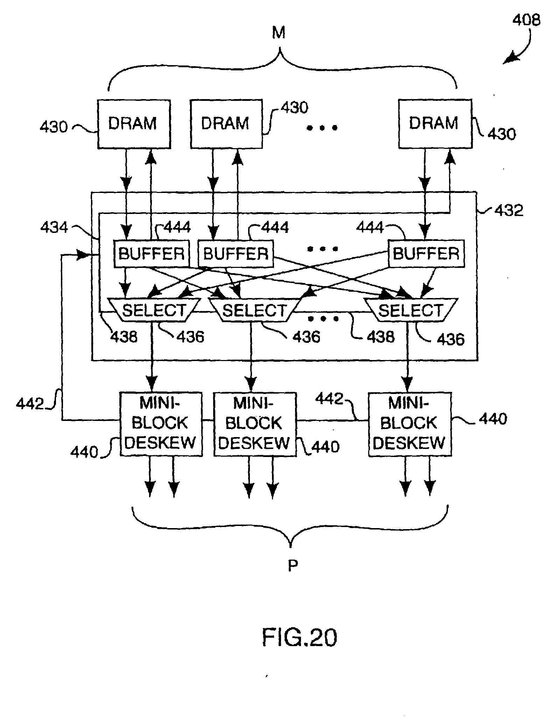

The order of the received voxels for each of the four mini-blocks is deskewed using a circuit such as that shown in Figure 20. The deskewer 408 is shown to include a sequence of buffers 444, one for each of the *M* SDRAM devices (where in the present embodiment, four SDRAM devices are provided). Multiplexers 438 are provided to rearrange the order of received voxels to reflect an expected order of voxels (1-8 as shown in Figure 11).

The selection of the voxel is controlled by mini-block deskew logic 440 via line 442. The mini-blocks are then forwarded to the VxSliceBuffer 410.

The deskew logic 440 rearranges the order of the received voxels to an expected order of voxels (1-8 as shown in Figure 11) in response to the amount of skewing that was performed during the write of voxels to voxel memory and further in response to the contents of transform register 520. In general, the rearrangement of the order of voxels follows six rules.

If the transform register indicates to exchange x and y, then the voxel in position 1 is swapped with that in position 2, and the voxel in position 5 is swapped with the voxel in position 6. If the transform register indicates to exchange x and z, then the voxel in position 1 is swapped with the voxel in position 4, and the voxel in position 3 is swapped with the voxel in position 6. If the transform register indicates to exchange y and z, then the voxel in position 2 is exchanged with the voxel in position 3 and the voxel in position 4 is exchanged with the voxel in position 5.

If the transform register indicates to negate x, then voxels in successive even and odd locations are exchanged (i.e., voxel 0 with 1, 2 with 3, etc). If the transform register indicates to negate y, then voxels 0 and 1 are exchanged with voxels 2 and 3 and voxels 4 and 5 are exchanged with voxels 6 and 7. If the transform register indicates to negate z, then voxels in the positions 0,1,2 and 3 are exchanged with voxels in the positions 4,5,6 and 7.

In determining which module is the starting module, the following rules are used. If the sign of x is negative, then decrement from the staffing module, else increment. If each of the sign of x, sign of y, sign of z is positive, then the starting module is 0. If two of the group including sign of x, the sign of y and sign of z are negative, and one is positive, then the staffing module is 2. If two of the group including sign of x, the sign of y, and the sign of z are positive, and one is negative, then the staffing module is three. If all of the group of sign of z, sign of y and sign of z are negative, then the staffing module is 1.

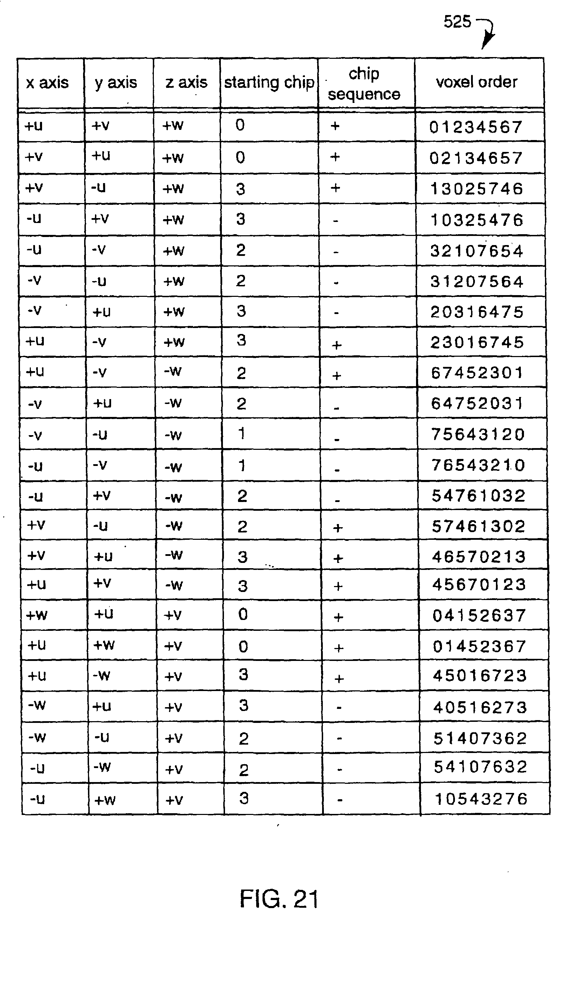

Referring to Figure 21, a table 525 illustrates example voxel orders based on the contents of the transformation register 520. Using the above rules, the deskewer logic 440 appropriately re-arranges the order of the voxels such that the voxels are ordered in expected mini-block order for processing.

Slice Buffers

As described above, after the voxels have been deskewed, a mini-beam of four mini-blocks is forwarded to the vxSliceBuffer 410. The slice buffers provide storage so that voxels received in mini-beam orientation can be converted to slice orientation for forwarding to the processing pipelines.

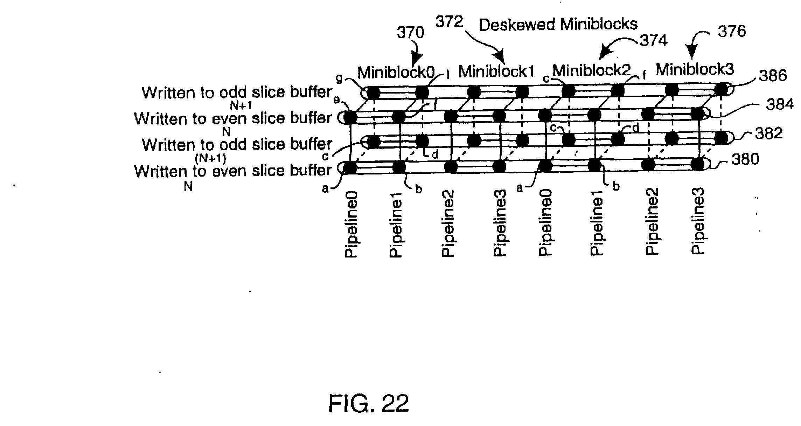

Figure 22 illustrates the relationship between voxels in mini-beam orientation and slice orientation. Mini-block 370, received from the deskewer 410, includes voxels a-h. In one embodiment the slice buffers are apportioned into even and odd pairs, each pair associated with data stored at consecutive even and odd slices of the volume data set. Each cycle that incoming voxel data is valid, sixteen voxels are written into the slice buffer, with eight voxels associated with a given (y, z) to one of the even numbered slice buffers N, i.e., voxels a and b of each of mini-blocks 370, 372, 374 and 376, and eight voxels associated with (y, z+1) to the next odd slice buffer N+1 i.e., the voxels c and d of each of the mini-blocks 370-376.

The next cycle, sixteen more voxels, representing voxels c and f of blocks 370-376 and voxels g-h of blocks 370-376, respectively, are written to the same two slice buffers. The writing to these two buffers continues until the slice is completed, then the next mini-beam received from the deskewer 410 is written as described above to slice buffer pair N+2 and N+3.

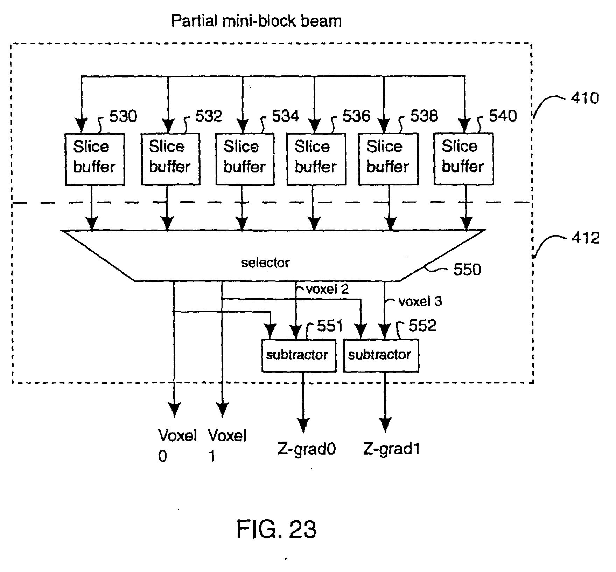

Referring now to Figure 23A, a block diagram illustrating one embodiment of the VxSliceBuffer 410 and the VxSbOutput 412 logic is provided. VxSliceBuffer 410 includes six slice buffer memories, each storing one slice worth of voxel data (i.e., 32 x 256 x 12 bits). In one embodiment, each slice buffer is formed from a 1K x 96 memory device, which is capable of storing eight 12-bit voxels in a given write cycle. Slice buffers 530, 534 and 538 are even slice buffers, and the slice buffers 532, 536 and 540 are odd slice buffers. Using the example of Figure 22, and assuming that the mini-blocks are from slice 0 and 1 of the volume data set, a first beam of voxels, such as beam 380 is written to even slice buffer 530 at the same time as a second beam of voxels, such as beam 382 is written to odd slice buffer 532.

In the next write cycle, beam 384 is written to slice buffer 530 while beam 386 is written to slice buffer 532. The writing of mini-blocks to the two slice buffers until the entire section for slice 0 and slice 1 has been stored in the slice buffers 530 and 532. Section data for slice 3 and slice 4 are stored in slice buffers 534 and 536 and section data for slice 5 and 6 are stored in slice buffer 538 and 540. This sequence of slice buffer even and odd pair writes continues for each of the following slices of the volume data set.

Once sufficient data has been written into the slice buffers the rendering process may begin. In order to perform the rendering process, voxels are forwarded from the slice buffers to the associated pipelines. The VxSbOutput 412 controls the forwarding of data to the associated pipelines. The VxSbOutput 412 includes a selector 550. The selector is coupled to the output of the six slice buffers 530-540, and selects four of the six values to use to generate data to forward to the rendering pipelines.

Rendering Pipelines

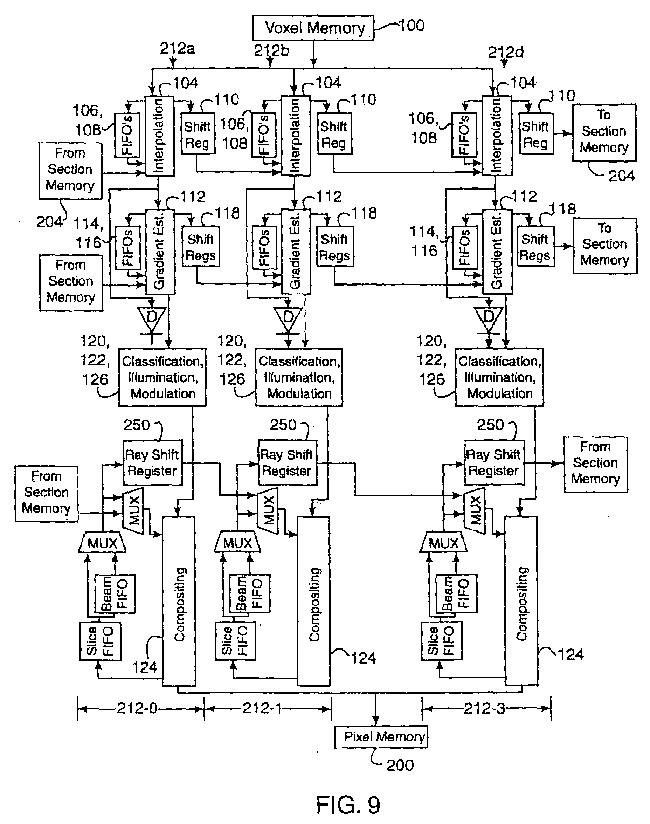

Figure 9 shows the processing element 210 of Figure 7, including four processing pipelines 212 similar to those described in Figures 5A and 5B. Parallel pipelines 212 receive voxels from voxel memory 100 and provide accumulated rays to pixel memory 200. For clarity only three pipelines 212-0, 212-1 and 212-3 are shown in Figure 14.

As described previously in Figures 5A and 5B, each pipeline 212 includes an interpolation unit 104, a gradient estimation unit 112, a classification unit 120, an illumination unit 122, modulation units 126 and a compositing unit 124, along with associated FIFO buffers and shift registers. Each pipeline processes adjacent voxel of sample values in the x-direction. That is, each pipeline processes all voxels 12 whose x-coordinate value modulo 4 is a given value between 0 and 3. Thus for example pipeline 212-0 processes voxels at positions (0,y,z), (4,y,z), ... , (252,y,z) for all y and z between 0 and 255. Similarly, pipeline 212-1 processes voxels at positions (1,y,z), (5,y,z), ... , (253,y,z) for all y and z, etc.

In order to time-align values needed for calculations, each operational unit or stage of each pipeline passes intermediate values to itself in the y- and z-dimensions via the associated FIFO buffers. For example, each interpolation unit 104 retrieves voxels at positions (x,y,z) and (x,y+1,z) in order to calculate the y-component of an interpolated sample at position (x,y,z).

The voxel at position (x,y,z) is delayed by a beam FIFO 108 (see Figure 5A) in order to become time-aligned with the voxel at position (x,y+1,z) for this calculation. An analogous delay can be used in the z-direction in order to calculate z-components, and similar delays are also used by the gradient units 112 and compositing units 124.

It is also necessary to pass intermediate values for calculations in the x-direction. However, in this case, the intermediate values are not merely delayed but are also transferred out of one pipeline to a neighboring pipeline. Each pipeline (such as pipeline 212-1) is coupled to its neighboring pipelines (i.e., pipelines 212-0 and 212-2) by means of shift registers in each of the four processing stages (interpolation, gradient estimation, classification and compositing). The shift registers are used to pass processed values from one pipeline to the neighboring pipeline. In one embodiment, the final pipeline, pipeline 212-3, transfers data from shift registers 110, 118 and 250 to section memory 204 for storage. This data is later retrieved from section memory 204 for use by the first pipeline stage 212-0. In essence, voxel and sample values are circulated among the pipelines and section memory so that the values needed for processing are available at the respective pipeline at the appropriate time during voxel and sample processing.

Because voxels are forwarded to the pipelines in slice/beam order, rather than as mini-blocks, the amount of data stored by any individual pipeline is reduced. In addition, the reduction in the amount of data retrieved each cycle further reduces the amount of data that needs to be transferred between various stages of the pipeline. Because less data is stored and transferred between pipelines, the multiple pipelines may be fabricated on a single integrated circuit device. Thus, a low-cost alternative is provided to implement real-time interactive volume rendering.

Accordingly, a volume data memory architecture has been introduced that makes optimum use of memory components by strategically writing voxels in memory in a skewed mini-block format that allows retrieval of the voxels in burst mode. Retrieving the voxels in burst mode allows the full performance potential of the memory devices to be realized, thereby facilitating real-time interactive rendering. In one embodiment, volume coordinates are stored as object coordinates, and translated by the memory interface into permuted coordinates to align the rendered components with a view direction. A transform register may be used to transform the addresses of the voxel element into addresses of voxels having the desired view. Performing this translation at the memory interfaces provides an easy method of changing views of the volume without having to actually alter the contents of memory.

The memory is controlled by a state machine which prioritizes render requests over other types of operations so that real-time rendering may be more easily achieved. Voxels retrieved as a result of a render request are then rearranged into a second format by voxel memory interface logic before being forwarded to pipelines for rendering. The second format is selected such that the amount of data that need be stored by each of the rendering pipelines and passed between the pipelines may be minimized, thereby making it possible to provide real-time interactive rendering capabilities within one integrated circuit.

Having now described a few embodiments of the invention and some modifications and variations thereto, it should be apparent to those skilled in the art that the foregoing is merely illustrative and not limiting, having been presented by way of example only. Numerous modifications and other embodiments are within the scope of one of ordinary skill in the art and are contemplated as falling within the scope of the invention as defined by the appended claims and equivalents thereto.

## Claims

1. An interface, for coupling a rendering device to a voxel memory storing a volume data set arranged as a three-dimensional array of mini-blocks, comprising:

   a traverser, for generating and forwarding addresses to the voxel memory to retrieve groups of mini-blocks in a predetermined order based on a view direction; and
   a plurality of slice buffers, for storing voxels of the retrieved groups of mini-blocks in a slice order for processing by the rendering device.

2. The interface of claim 1, further comprising:

   a host path, for transferring the volume data set between a host memory and the voxel memory;
   an address path, for forwarding the addresses generated by the traverser; and
   a memory controller, for controlling accesses to the voxel memory, wherein the memory controller includes:
   a selector having a first input coupled to the host path and a second pair coupled to the address path, for selecting addresses to forward to the voxel memory; and
   an address translator, coupled to an output of the selector, for translating the addresses to corresponding physical addresses of the voxel memory.

3. The interface of claim 1, wherein the voxel memory comprises *M* memory modules, and wherein consecutive mini-blocks in any dimension are stored in different memory modules.

4. The interface of claim 3 wherein an address translator determines which of the *M* storage modules is associated with a particular voxel in a particular mini-block using an equation:

$$ModuleNumber = \left( X_{mb} + Y_{mb} + Z_{mb} \right) \bmod M \,,$$

   where $X_{mb}$, $Y_{mb}$ and $Z_{mb}$ are the coordinates of the particular mini-block.

5. The interface of claim 1 wherein the voxel memory comprises *M* memory modules and each of the M storage modules comprises *B* banks, and wherein consecutive mini-blocks in any dimension are stored different banks.

6. The interface of claim 5 wherein an address translator determines which of the *B* banks is associated with a particular voxel in the mini-block using an equation:

$$BankNumber = \left( \left\lfloor \frac{X_{mb}}{M} \right\rfloor + \left\lfloor \frac{Y_{mb}}{M} \right\rfloor + \left\lfloor \frac{Z_{mb}}{M} \right\rfloor \right) \bmod B \,,$$

   where $X_{mb}$, $Y_{mb}$ and $Z_{mb}$ are coordinates of the particular mini-block.

7. The interface of claim 1 further comprises:

   a transform register, coupled to the traverser, the transform register for storing mapping data, the mapping data for transforming coordinates of each mini-block from an object coordinate system to a permuted coordinate system.

8. The interface of claim 7 wherein the transforming rearranges the coordinates based on the desired a view.

9. A memory interface for a plurality of rendering pipelines comprising:

   a first interface coupling a host memory to a voxel memory, the host memory storing a volume data set as a three dimensional array of voxels, the voxel memory storing the volume data set as a three-dimensional array of mini-blocks of voxels;
   a second interface coupling the voxel memory to the plurality of rendering pipelines for generating pixels from the voxels stored in the voxel memory;
   a third interface coupling the rendering pipelines to a pixel memory for storing the pixels as a two-dimensional array.

10. The memory interface of claim 9, wherein the voxel memory includes a plurality of memory modules, and wherein the first interface receives the voxels sequentially according to an order of the three-dimensional array of voxels and distributes consecutive mini-blocks in any of the three dimension to different memory modules.

11. The memory interface of claim 10, wherein each memory modules includes a plurality of banks, and wherein the first interface receives the voxels sequentially according to an order of the three-dimensional array of voxels and distributes consecutive mini-blocks in any of the three dimension to different banks.

12. A method of interfacing a voxel memory to a rendering device comprising the steps of:

   writing mini-blocks of voxels of a volume data set into the voxel memory;
   reading groups of mini-blocks of voxels from the voxel memory and rearranging the voxels into slice of the volume data set; and
   forwarding the slices to the rendering device in a slice order.

**13.** A method for translating addresses of voxels processed by a plurality of rendering pipelines, comprising the steps of:

storing the voxels in a voxel memory using addresses associated with object coordinates independent of a view direction;
transferring the voxels from the voxel memory to the plurality rendering pipelines using addresses associated with permuted coordinates dependent of the view direction.

**14.** The method of claim 13 wherein the voxel memory includes a plurality of memory modules and further comprising the steps of:

grouping adjacent voxels as mini-blocks;
arranging the mini-blocks in the voxel memory as a three-dimensional array;
storing adjacent mini-blocks in any of the three dimensions in different memory modules.

base plane

volume data set

$U$

$V$

$W$

$Z$

$Y$

$X$

$Z_b$ $X_b$ $Y_b$

7

9

12

10

12

11

13

(endX, endY)

view direction

5

image plane

$Y_i$

$X_i$

$Z_i$

15

FIG. 1

FIG. 2

FIG. 3

INTERPOLATION, 21

ILLUMINATION

20

10

12

12

20

18

VOLUME
DATA

GRADIENT
ESTIMATION, 23

25
25
25
25
25

RED
GREEN
BLUE

27

COMPOSITING, 29

32

16

IMAGE

FIG. 4

EP 1 054 384 A2

FIG. 5a

FIG. 5b

150

Host ⌐130

132

Processor  136 ⌐
138⌐
Memory

VGB
Driver    3-D
Volume

208⌐   PCI-RIJS

140⌐

SECTION MEMORY
(SXMem)    S-BUS  VRC  P-BUS  PIXEL MEMORY
(PXMem)    200

SDRAM    ⌐202    SDRAM
206⌐    206

204⌐

VOXEL MEMORY
(VXMEM)    ⌐100
206

SDRAM

VOLUME GRAPHICS BOARD (VGB)

FIG. 6

FIG. 7

FIG. 8

FIG. 9

70

sc_reqRender

vx_ackRender
pipeInit

vxInit

T1    T2    T3    T4    T5

reqVxMem
ackVxMem

fetchSlice

traverserDone

writ ing sb

| 0.1 | 2.3 | 4.5 | 0.1 | 2.3 | 4.5 |

sbEmpty[5:0]

| All | 2.5 | 4.5 | 0 | 0.1 | 2 | 2.3 | 4 | 4.5 | 0 | 0.1 |

reading sb

| 5012 | 0123 | 1234 | 2345 | 3450 | 4501 | 5012 | 1234 | 2 |

pendingStepZ

FIG. 10

FIG. 11

FIG. 12

FIG. 13

FIG. 14

FIG. 15

400

FIG. 16

FIG. 17

FIG. 18

520

| Tx | | Register:<br>Adress:<br>Read/Write: | TRANSFORM<br>x'1D4C'<br>Write Only | |
|---|---|---|---|---|
| Bit | Field Name | | Reset<br>Value | Description |
| 31:9 | – | | – | Not Used (Must be written as zero) |
| 8:7 | selectX | | X | X Axis Selection<br>0 - X axis is U<br>1 - X axis is V<br>2 - X axis is W<br>3 - Not Valid |
| 6:5 | selectY | | X | Y Axis Selection<br>0 - Y axis is U<br>1 - Y axis is V<br>2 - Y axis is W<br>3 - Not Valid |
| 4:3 | selectZ | | X | Z Axis Selection<br>0 -Z axis is U<br>1 - Z axis is V<br>2 - Z axis is W<br>3 - Not Valid |
| 2 | negX | | X | Sign of X.<br>0 -Positive<br>1 - Negative |
| 1 | negY | | X | Sign of Y.<br>0 -Positive<br>1 - Negative |
| 0 | negZ | | X | Sign of Z.<br>0 -Positive<br>1 - Negative |

FIG. 19

FIG.20

525

| x axis | y axis | z axis | starting chip | chip sequence | voxel order |
|--------|--------|--------|---------------|---------------|-------------|
| +u | +v | +w | 0 | + | 01234567 |
| +v | +u | +w | 0 | + | 02134657 |
| +v | -u | +w | 3 | + | 13025746 |
| -u | +v | +w | 3 | - | 10325476 |
| -u | -v | +w | 2 | - | 32107654 |
| -v | -u | +w | 2 | - | 31207564 |
| -v | +u | +w | 3 | - | 20316475 |
| +u | -v | +w | 3 | + | 23016745 |
| +u | -v | -w | 2 | + | 67452301 |
| -v | +u | -w | 2 | - | 64752031 |
| -v | -u | -w | 1 | - | 75643120 |
| -u | -v | -w | 1 | - | 76543210 |
| -u | +v | -w | 2 | - | 54761032 |
| +v | -u | -w | 2 | + | 57461302 |
| +v | +u | -w | 3 | + | 46570213 |
| +u | +v | -w | 3 | + | 45670123 |
| +w | +u | +v | 0 | + | 04152637 |
| +u | +w | +v | 0 | + | 01452367 |
| +u | -w | +v | 3 | + | 45016723 |
| -w | +u | +v | 3 | - | 40516273 |
| -w | -u | +v | 2 | - | 51407362 |
| -u | -w | +v | 2 | - | 54107632 |
| -u | +w | +v | 3 | - | 10543276 |

FIG. 21

FIG. 22

Partial mini-block beam

FIG. 23